(19) Europäisches Patentamt
European Patent Office
Office européen des brevets

(11) EP 3 419 101 B1

(12) **EUROPEAN PATENT SPECIFICATION**

(45) Date of publication and mention of the grant of the patent:
**25.09.2019 Bulletin 2019/39**

(21) Application number: **17774959.5**

(22) Date of filing: **27.03.2017**

(51) Int Cl.:
***H01M 10/06*** (2006.01) ***H01M 4/14*** (2006.01)
***H01M 4/56*** (2006.01) ***H01M 4/62*** (2006.01)

(86) International application number:
**PCT/JP2017/012430**

(87) International publication number:
**WO 2017/170422 (05.10.2017 Gazette 2017/40)**

(54) **LEAD STORAGE BATTERY, MICRO-HYBRID VEHICLE AND START-STOP SYSTEM VEHICLE**

BLEIAKKUMULATOR, MIKROHYBRIDFAHRZEUG UND FAHRZEUG MIT START-STOPPSYSTEM

BATTERIE DE STOCKAGE AU PLOMB, VÉHICULE MICRO-HYBRIDE ET VÉHICULE À SYSTÈME DE DÉMARRAGE-ARRÊT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2016 JP 2016068608**

(43) Date of publication of application:
**26.12.2018 Bulletin 2018/52**

(73) Proprietor: **Hitachi Chemical Co., Ltd.**
**Chiyoda-ku**
**Tokyo 100-6606 (JP)**

(72) Inventors:
- **SHIMADA Kohei**
  **Tokyo 100-6606 (JP)**
- **SHIBAHARA Toshio**
  **Tokyo 100-6606 (JP)**
- **KIMURA Takayuki**
  **Tokyo 100-6606 (JP)**
- **KONDOH Takafumi**
  **Tokyo 100-6606 (JP)**
- **KOBAYASHI Shinsuke**
  **Tokyo 100-6606 (JP)**

(74) Representative: **Hoffmann Eitle**
**Patent- und Rechtsanwälte PartmbB**
**Arabellastraße 30**
**81925 München (DE)**

(56) References cited:
**WO-A1-2011/142072**
**WO-A1-2012/042917**
**WO-A1-2016/084858**
**JP-A- 2005 025 955**
**JP-A- 2005 044 759**
**JP-A- 2005 044 759**
**JP-B1- 5 587 523**
**US-A1- 2009 253 041**
**US-A1- 2013 157 118**

- **FLAMARION B. DINIZ ET AL: "A comparative study of pulsed current formation for positive plates of automotive lead acid batteries", JOURNAL OF POWER SOURCES, vol. 109, no. 1, 1 June 2002 (2002-06-01), pages 184-188, XP055523916, CH ISSN: 0378-7753, DOI: 10.1016/S0378-7753(02)00065-4**
- **FITAS R ET AL: "Heat treatment of alpha- and beta-battery lead dioxide and its relationship to capacity loss", JOURNAL OF POWER SOURCES, ELSEVIER SA, CH, vol. 58, no. 2, 1 February 1996 (1996-02-01), pages 225-229, XP004069938, ISSN: 0378-7753, DOI: 10.1016/S0378-7753(96)02372-5**
- **ZENPACHI OGUMI et al.: Beginners Books 20 Hajimete no Niji Denchi Gijutsu, vol. C 2055, 2001, pages 47-48, ISBN: 4-7693-1196-6**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present disclosure relates to a lead storage battery, a micro-hybrid vehicle and a start-stop system vehicle.

### Background Art

In recent years, in the automobile industry, various measures to improve fuel consumption have been investigated, in order to prevent air pollution or global warming. As for the automobile in which the measures to improve the fuel consumption are taken, for example, a micro-hybrid vehicle, such as a vehicle with a start-stop system (idling stop system, hereinafter referred to as "ISS vehicle") which reduces an operation time of an engine and a power generation control vehicle which uses a rotation of the engine for the power without waste, has been investigated.

In the ISS vehicle, the number of times of starting the engine increases, and accordingly a discharge of a large current of a lead storage battery is repeated. In addition, in the ISS vehicle and the power generation control vehicle, the electrical power output by the alternator is reduced, the lead storage battery is intermittently charged, and accordingly the charging becomes insufficient.

The lead storage battery which is used in the above described way results in being used in a partially charged state, which is referred to as PSOC (Partial State Of Charge). When the lead storage battery is used under the PSOC, the life becomes shorter than that in the case where the lead storage battery is used in a fully charged state.

In Europe, the charge performance of the lead storage battery in charge and discharge cycles according to the control for the micro-hybrid vehicle, is considered to be important in recent years, and DCA (Dynamic Charge Acceptance) evaluation in such a manner is being standardized. In other words, as for a way in which the lead storage battery is used, the use in a partially charged state as described above has become regarded as important.

In the following Patent Literature 1, a technology is disclosed which adjusts the specific surface area of the active material in the positive electrode plate to 5.5 $m^2/g$ or more, by changing conditions for formation in the battery case, so as to improve the charging efficiency and the cycle performance of the battery when the battery is used under the PSOC.

### Citation List

### Patent Literature

Patent Literature 1: International publication No. WO 2012/042917

## Summary of Invention

### Technical Problem

By the way, when the lead storage battery is used in a state of being completely charged, the agitation of the electrolytic solution is performed by gas generation (gassing) in the end stage of the charging. In contrast to this, when the lead storage battery is not completely charged and is used in a state of insufficient charge, a stratification phenomenon occurs wherein, in the phenomenon, a difference in the concentration of dilute sulfuric acid as an electrolytic solution arises between an upper part and a lower part of an electrode (polar plate or the like) in the battery. In other words, the gassing does not occur in partial charging, accordingly the agitation of the electrolytic solution becomes insufficient, and as a result, the concentration of the electrolytic solution becomes nonuniform. In this case, the concentration of dilute sulfuric acid becomes high in the lower part of the electrode, and therefore, the sulfation occurs. The sulfation is a phenomenon such that lead sulfate which is a discharge product resists being returned to a charged state. Therefore, when the sulfation occurs, the reactivity of the lower part of the electrode is lowered, and only the upper part of the electrode becomes to react intensively. As a result, in the upper part of the electrode, a degradation progresses, for example, the connection between active materials becomes weak, and thus the active material exfoliates from the current collector, which leads to lowering of the battery performance and shortening of the life. Because of this, it becomes an extremely important problem for the latest lead storage battery to improve charge acceptability, so as to improve the cycle performance of the battery in the case where the lead storage battery is used under the PSOC. Examples of indicators of a performance of the lead storage battery that is used mainly in the PSOC state include "ISS cycle performance", and the ISS cycle performance can be evaluated by a cycle test which simulates the way the lead storage battery is used in the ISS vehicle.

In addition, when relatively deep charge and discharge has been repeated, if the high-rate discharge performance of the lead storage battery is insufficient, the battery voltage is lowered at the time of restart of the engine after turning off a vehicle engine when stopped, and the engine cannot be restarted. In particular, it becomes important to improve the low-temperature high-rate discharge performance so that the battery can operate even in low temperature areas in which the battery is used below freezing point.

The present disclosure is designed with respect to the above circumstances and its object is to provide a lead storage battery which can attain both of the excellent charge acceptability and low-temperature high-rate discharge performance at a sufficiently high level. An object of the present disclosure is to provide a micro-hybrid vehicle and an ISS vehicle provided with this lead storage battery.

**Solution to Problem**

The present inventors have found that the above described problems can be solved by using a specific positive electrode material and a negative electrode material containing specific constituent components.

Specifically, the lead storage battery of the present disclosure comprises: a positive electrode having a positive electrode material containing $\beta$-$PbO_2$ and $\alpha$-$PbO_2$; a negative electrode having a negative electrode material containing an organic compound having at least one selected from the group consisting of a sulfone group and a sulfonate group, wherein the specific surface area of the positive electrode material is 10 $m^2/g$ or more, and the ratio ($\alpha$-$PbO_2$/$\beta$-$PbO_2$) between peak intensities of $\beta$-$PbO_2$ and $\alpha$-$PbO_2$ in an X-ray diffraction pattern in the positive electrode material is 0.4 or less.

According to the lead storage battery of the present disclosure, it is possible to attain both of the excellent charge acceptability and low-temperature high-rate discharge performance at a sufficiently high level. According to the lead storage battery of the present disclosure, it is possible to keep the SOC at an appropriate level, which tends to become low in the ISS vehicle, the micro-hybrid vehicle and the like, particularly after the charge and discharge has been repeated to some extent from the initial state and the active material has been sufficiently activated. The present disclosure provides a micro-hybrid vehicle and an ISS vehicle provided with the above described lead storage battery.

The content of the above described organic compound in the negative electrode material is preferably 0.3 mass% or less when the total mass of the negative electrode material is 100 mass%, in view of further improving the charge acceptability, and on the other hand, the content is preferably 0.1 mass% or more, in view of further improving the discharge characteristics. The organic compound may be a bisphenol-based resin. The bisphenol-based resin may be a condensate of bisphenol, aminobenzenesulfonic acid and formaldehyde.

In view of further improving the low-temperature high-rate discharge performance, the mass ratio (positive electrode material / negative electrode material) between the mass of the positive electrode material and the mass of the negative electrode material is preferably 1.3 or less after the formation. In view of further improving battery characteristics, it is preferred that the positive electrode material contains a positive electrode active material and the content of the positive electrode active material based on the mass of the positive electrode material is 95 mass% or more; and it is preferred that the negative electrode material contains a negative electrode active material and the content of the negative electrode active material based on the mass of the negative electrode material is 93 mass% or more.

By the way, the above described Patent Literature 1 discloses that the specific surface area of the active material in the positive electrode plate is adjusted to 5.5 $m^2/g$ or more by changing conditions for the formation in the battery case. However, it has become clear that there is a limit in increasing the specific surface area of the active material in the positive electrode plate by only changing conditions for the formation in the battery case. In addition, as for sludging which is a phenomenon in which the positive electrode active material is softened and falls off, it is described in the above described Patent Literature 1 that a charge and discharge cycle test (cycle test of life mode which results from sludging of positive electrode active material) is performed wherein, in this test, the battery becomes impossible to discharge due to the sludging of the positive electrode active material and leads to the end of its life, and that the cycle performance lowers when the specific surface area of the active material in the positive electrode plate becomes 9.4 $m^2/g$ or more. On the other hand, according to the lead storage battery of the present disclosure, an excellent cycle performance can be obtained also in the cycle test of the life mode which results from the sludging of the positive electrode active material. According to the lead storage battery of the present disclosure, even when the specific surface area of the positive electrode material is 10 $m^2/g$ or more, in particular, the excellent cycle performance can be obtained.

It is known that, when the lead storage battery is overcharged, such electrolysis occurs that water in the electrolytic solution is decomposed into oxygen gas and hydrogen gas. When the electrolysis occurs, the gases (oxygen gas and hydrogen gas) generated by the electrolysis are discharged to the outside of the system, and accordingly a water content in the electrolytic solution decreases. As a result, a concentration of sulfuric acid in the electrolytic solution increases, and a reduction of the capacity progresses due to the corrosion deterioration of the positive electrode plate, or the like. In addition, if the polar plate is exposed from the electrolytic solution as a liquid level of the electrolytic solution lowers, such problems occur that the discharge capacity suddenly decreases, or that the connecting portion between the negative electrode plate and the strap or the strap itself corrodes. Even if the electrolytic solution has decreased,

the problems do not occur as long as the maintenance of replenishing the battery case with water is performed. However, it is required to suppress the decrease of water in the electrolytic solution, in view of decreasing the frequency of the maintenance. In addition, it has become clear by the knowledge of the present inventors that, also in the lead storage battery used under the PSOC, the electrolysis of the electrolytic solution occurs, and the water content in the electrolytic solution decreases. The reason for this is not necessarily clear, but in regard to this, the present inventors assume that it is a main reason that a portion locally exists at which the active material becomes a fully charged state in the electrode even when the lead storage battery is under the PSOC, and that the electrolysis of the electrolytic solution occurs in this portion.

## Advantageous Effects of Invention

According to the lead storage battery of the present disclosure, it is possible to attain both of the excellent charge acceptability and the low-temperature high-rate discharge performance at the sufficiently high level. In addition, according to the lead storage battery of the present disclosure, it is possible to keep the SOC at an appropriate level, which tends to become low in the ISS vehicle, the micro-hybrid vehicle and the like, particularly after the charge and discharge have been repeated to some extent from the initial state and the active material has been sufficiently activated.

According to the present disclosure, it is possible to provide an application of the lead storage battery to the micro-hybrid vehicle. According to the present disclosure, it is possible to provide the application of the lead storage battery to the ISS vehicle.

## Brief Description of Drawings

Figure 1 is a perspective view showing one embodiment of a lead storage battery of the present disclosure.
Figure 2 is a view showing the internal structure of the lead storage battery shown in Figure 1.
Figure 3 is a perspective view showing one example of a polar plate group.
Figure 4 is a view showing one example of an X-ray diffraction pattern of a positive electrode material.

## Description of Embodiments

Embodiments of the present disclosure will be described in detail below. The specific gravity varies depending on a temperature, and accordingly is defined as a specific gravity which is converted to that at 20°C, in the present specification.

<Lead storage battery, micro-hybrid vehicle and ISS vehicle>

The lead storage battery of the present embodiment comprises (A) a positive electrode and (B) a negative electrode.

The positive electrode (A) has a positive electrode current collector, and a positive electrode material (electrode material) supported by the positive electrode current collector. The negative electrode (B) has a negative electrode current collector, and a negative electrode material (electrode material) supported by the negative electrode current collector. In the lead storage battery of the present embodiment, the specific surface area of the positive electrode material is 10 $m^2/g$ or more, and the ratio ($\alpha$-$PbO_2$/$\beta$-$PbO_2$) between the peak intensities of ($\beta$-$PbO_2$ and $\alpha$-$PbO_2$ in the X-ray diffraction pattern in the positive electrode material is 0.4 or less. In addition, the negative electrode material contains an organic compound having a sulfone group or a sulfonate group. The micro-hybrid vehicle and the ISS vehicle of the present embodiment are provided with the lead storage battery of the present embodiment. In the present embodiment, the electrode material means an electrode material which has been already subjected to the formation (for example, fully charged state). In the stage of being unformed, a material corresponding to the electrode material contains a substance to become the electrode material by the formation.

The lead storage battery of the present embodiment can be applied to various types of lead storage batteries, specifically, to a liquid type lead storage battery, a control valve type lead storage battery, a closed type lead storage battery and the like, but among the lead storage batteries, the liquid type lead storage battery is preferable in view of the manufacturing cost and the like. A lead storage battery 1 shown in Figure 1 is a liquid type lead storage battery. Figure 2 is a view showing the internal structure of the lead storage battery 1. The lead storage battery 1 comprises: a battery case 2 of which the upper face is opened and in which a plurality of polar plate groups 11 are stored; and a lid 3 which closes the opening of the battery case 2. The lid 3 is formed from, for example, polypropylene, and comprises a positive electrode terminal 4, a negative electrode terminal 5, and a liquid port plug 6 which blocks a liquid injection

port provided in the lid 3. An electrolytic solution (not shown) is accommodated in the battery case 2.

The polar plate group has separators, and positive electrode plates and negative electrode plates which are alternately stacked via the separators. As shown in Figures 2 and 3, the polar plate group 11 comprises, for example: positive electrode plates 12; negative electrode plates 13; a sack-shaped separator 14; a positive electrode side strap 15; a negative electrode side strap 16; and a connecting portion 17 between the cells, or a pole pillar 18. On the positive electrode plate 12 and the negative electrode plate 13, a current collecting portion 22 and a current collecting portion 32 which are referred to as "ear portions" are provided on the upper peripheries, respectively.

(Positive electrode (A))

[Positive electrode current collector]

Examples of the composition of the positive electrode current collector include lead alloys such as a lead-calcium-tin-based alloy and a lead-antimony-arsenic-based alloy. Selenium, silver, bismuth or the like may be appropriately added to the positive electrode current collector according to the application. The positive electrode current collector can be obtained by forming these lead alloys into a grid shape by a gravity casting method, an expanding method, a stamping method or the like.

[Positive electrode material]

The positive electrode material contains a positive electrode active material and can further contain additives which will be described later, as needed. As described later, the positive electrode material after the formation can be obtained by operations of: aging and drying a positive electrode material paste containing a raw material of the positive electrode active material to thereby obtain an unformed positive electrode material; and then performing the formation. The raw material of the positive electrode active material is not limited in particular, and examples include lead powder. Examples of the lead powder include lead powder (mixture of main component PbO powder and scaly metallic lead, in ball mill type lead powder producing machine) which is produced, for example, by a ball mill type lead powder producing machine or a Burton-pot type lead powder producing machine. Red lead ($Pb_3O_4$) may be used as the raw material of the positive electrode active material, in view of enabling a reduction of the formation time, but the cycle performance can be further improved by not using red lead ($Pb_3O_4$). The unformed positive electrode material preferably contains an unformed positive electrode active material containing a tribasic lead sulfate as a main component. The positive electrode material after the formation contains, for example, $\alpha$-$PbO_2$ and $\beta$-$PbO_2$ as the positive electrode active material.

The content of the positive electrode active material is preferably 95 mass% or more, may be 97 mass% or more, and may also be 99 mass% or more, based on the total mass of the positive electrode material, in view of the further excellent battery characteristics (capacity, low-temperature high-rate discharge performance, charge acceptability, cycle performance and the like).

The specific surface area of the positive electrode material of the lead storage battery of the present embodiment is 10 $m^2/g$ or more. When the specific surface area of the positive electrode material is less than 10 $m^2/g$, it is difficult to obtain sufficient charge acceptability. The specific surface area of the positive electrode material is preferably 10.5 $m^2/g$ or more, more preferably 11.5 $m^2/g$ or more, and further preferably 12 $m^2/g$ or more, in view of further improving the charge acceptability. The upper limit of the specific surface area of the positive electrode material is not limited in particular, but is preferably 20 $m^2/g$ or less, more preferably 15 $m^2/g$ or less, and further preferably 13 $m^2/g$ or less, in view of further improving the cycle performance. From such viewpoints, the specific surface area of the positive electrode material is preferably 10 to 20 $m^2/g$, is more preferably 10.5 to 15 $m^2/g$, is further preferably 11.5 to 13 $m^2/g$, and is particularly preferably 12 to 13 $m^2/g$. The above described specific surface area of the positive electrode material is the specific surface area of the positive electrode material after the formation. The specific surface area of the positive electrode material can be adjusted, for example, by a method of adjusting the amounts of sulfuric acid and water added when the below-mentioned positive electrode material paste is prepared; a method of refining the positive electrode active material at a stage where the positive electrode active material is unformed; a method of changing a formation condition; and the like.

The specific surface area of the positive electrode material is measured by a BET method using nitrogen gas. The BET method is a method of making the surface of a measurement sample adsorb an inert gas of which one molecule size is known (for example, nitrogen gas), and determining the surface area from the amount adsorbed and the occupying area of the inert gas; and is a general measurement method of the specific surface area. Specifically, it is measured on the basis of the following BET equation.

The relational expression of the following expression (1) holds well when P/Po is in a range of 0.05 to 0.35. In the expression (1), the details of each symbol are as follows.

P: adsorption equilibrium pressure in adsorption equilibrium state at certain temperature
Po: saturated vapor pressure at adsorption temperature
V: amount adsorbed at adsorption equilibrium pressure P
Vm: amount of monomolecular layer adsorbed (amount adsorbed when gas molecules have formed monomolecular layer on solid surface)
C: BET constant (parameter relating to interaction between solid surface and adsorbed substance)

[Expression 1]

$$\frac{P}{V(P_0 - P)} = \left(\frac{C-1}{V_m C}\right)\left(\frac{P}{P_0}\right) + \frac{1}{V_m C} \quad \cdots (1)$$

The following expression (2) is obtained by an operation of modifying the expression (1) (dividing numerator and denominator on left side by P). The specific surface area meter that is used for the measurement makes a gas molecule of which the adsorption occupying area is known adsorbed onto the sample and measures a relation between the amount adsorbed (V) and the relative pressure (P/Po). On the basis of the measured V and P/Po, the left side of the expression (2) and P/Po are plotted. Here, assuming that the gradient is s, the following expression (3) is derived from the expression (2). Assuming that the intercept is i, the intercept i and the gradient s are given by the following expressions (4) and (5), respectively.
[Expression 2]

$$\frac{1}{V\left(\frac{P_0}{P} - 1\right)} = \left(\frac{C-1}{V_m C}\right)\left(\frac{P}{P_0}\right) + \frac{1}{V_m C} \quad \cdots (2)$$

[Expression 3]

$$s = \frac{C-1}{V_m C} = \frac{C}{V_m C} - \frac{1}{V_m C} = \frac{1}{V_m} - \frac{1}{V_m C} \quad \cdots (3)$$

[Expression 4]

$$i = \frac{1}{V_m C} \quad \cdots (4)$$

[Expression 5]

$$s = \frac{1}{V_m} - i \quad \cdots (5)$$

When the expressions (4) and (5) are modified, the following expressions (6) and (7) are obtained, respectively, and the following expression (8) is obtained which determines the amount Vm of the monomolecular layer adsorbed. Specifically, several points of the amount adsorbed V are measured at a certain relative pressure P/Po to determine the gradient and intercept of the plot, and the amount Vm of the monomolecular layer adsorbed is determined.
[Expression 6]

$$s \times V_m = 1 - i \times V_m \quad \cdots (6)$$

[Expression 7]

$$(s+i)V_m = 1 \quad \cdots (7)$$

[Expression 8]

$$V_m = \frac{1}{s+i} \quad \cdots (8)$$

The total surface area Stotal ($m^2$) of the sample is determined by the following expression (9), and the specific surface area S ($m^2/g$) is determined by the following expression (10) on the basis of the total surface area Stotal. In the expression (9), N represents an Avogadro's number, ACS represents an adsorption cross-sectional area ($m^2$), and M represents a molecular weight. In addition, in the expression (10), w represents the quantity (g) of the sample.
[Expression 9]

$$S_{total} = (V_m \times N \times A_{CS})M \quad \cdots (9)$$

[Expression 10]

$$S = \frac{S_{total}}{w} \quad \cdots (10)$$

The ratio ($\alpha$-$PbO_2$/$\beta$-$PbO_2$) between the peak intensities of $\beta$-$PbO_2$ and $\alpha$-$PbO_2$ in the X-ray diffraction pattern in the positive electrode material of the lead storage battery of the present embodiment is 0.4 or less, in view of obtaining the excellent charge acceptability. It is assumed that the ratio ($\alpha$-$PbO_2$/$\beta$-$PbO_2$) between the peak intensities of $\beta$-$PbO_2$ and $\alpha$-$PbO_2$ in the X-ray diffraction pattern in the positive electrode material is 0.4 or less, thereby the overvoltage of the positive electrode can be lowered, and accordingly the excellent charge acceptability can be obtained. The above described ratio ($\alpha$-$PbO_2$/$\beta$-$PbO_2$) is preferably 0.2 or less, more preferably 0.1 or less, and further preferably 0.06 or less, in view of obtaining a further excellent charge acceptability. The above described ratio ($\alpha$-$PbO_2$/$\beta$-$PbO_2$) is preferably 0.005 or more, more preferably 0.01 or more, and further preferably 0.02 or more, in view of obtaining excellent shape retainability of the positive electrode material. The above described ratio ($\alpha$-$PbO_2$/$\beta$-$PbO_2$) can be adjusted, for example, by temperature at the time of the formation. For example, as a formation temperature becomes high, the above described ratio ($\alpha$-$PbO_2$/$\beta$-$PbO_2$) can be increased.

The $\beta$-$PbO_2$ is electrically active and is involved in a charge and discharge reaction, but the $\alpha$-$PbO_2$ is less active than the $\beta$-$PbO_2$ and is not involved in a discharge reaction, in particular. When a lot of sulfuric acid is added, a state of containing a lot of $\beta$-$PbO_2$ is obtained, but lead sulfate uniformly finely precipitates throughout the electrode plate, accordingly the lead sulfate reacts uniformly at the time of charging, and thereby the reaction resistance decreases, which is considered to work advantageously for the charge reaction.

As a result of the wide angle X-ray diffraction of the positive electrode material after the formation, $\alpha$-$PbO_2$, $\beta$-$PbO_2$ and $PbSO_4$, for example, are detected as main chemical compounds. "Main peak intensity of $\alpha$-$PbO_2$"/"main peak intensity of $\beta$-$PbO_2$" can be calculated as the ratio ($\alpha$-$PbO_2$/$\beta$-$PbO_2$), with the use of main peak intensities (cps) of waveforms which are specified as the respective chemical compounds of $\alpha$-$PbO_2$ and $\beta$-$PbO_2$. An X-ray diffraction apparatus SmartLab (made by Rigaku Corporation), for example, can be used as a wide angle X-ray diffraction apparatus. Wide angle X-ray diffraction measurement can be carried out, for example, by a method as follows.

[Method of wide angle X-Ray diffraction measurement]

- Measuring apparatus: full automatic multipurpose horizontal type X-ray diffraction apparatus SmartLab (made by Rigaku Corporation)
- X-ray source: Cu-Ka/1.541862 Å
- Filter: Cu-K$\beta$
- Output: 40 kV, 30 mA
- Scan mode: CONTINUOUS

- Scan range: 20.0000 degrees to 60.0000 degrees
- Step width: 0.0200 degrees
- Scan axis: 2θ/θ
- Scan speed: 10.0000 degrees/minute
- Sample holder: made from glass, depth of 0.2 mm
- Sample preparation method: the measurement sample can be prepared by the following procedure. Firstly, the formed battery is disassembled; the positive electrode plate is taken out and is washed with water; and then is dried at 50°C for 24 hours. Next, 3 g of the positive electrode material is collected from the central portion of the above described positive electrode plate and is ground.
- Calculation method: the prepared sample is filled so as to be equal to the depth of the sample holder to form a smooth sample surface. Suppose that the wide angle X-ray diffraction is measured, and that, from the obtained X-ray diffraction chart of a diffraction angle (2θ) and a diffraction peak intensity, $\alpha$-$PbO_2$ which is positioned at a diffraction angle of 28.6 degrees and $\beta$-$PbO_2$ which is positioned at a diffraction angle of 25.3 degrees have been detected. The ratio of "peak intensity of $\alpha$-$PbO_2$"/"peak intensity of $\beta$-$PbO_2$" is calculated as the ratio $\alpha$-$PbO_2$/$\beta$-$PbO_2$, with the use of the peak intensities (cps) of the waveforms specified as the respective chemical compounds of $\alpha$-$PbO_2$ (110 plane) and $\beta$-$PbO_2$ (111 plane). Figure 4 is a view showing one example of the X-ray diffraction pattern of the positive electrode material.

The density of the positive electrode material is preferably 3.8 g/cm$^3$ or more, more preferably 4.0 g/cm$^3$ or more, and further preferably 4.2 g/cm$^3$ or more, in view of further improving the charge acceptability and the cycle performance. The density of the positive electrode material is preferably 5.0 g/cm$^3$ or less, more preferably 4.8 g/cm$^3$ or less, and further preferably 4.6 g/cm$^3$ or less, in view of further improving 5-hour time rate capacity and the low-temperature high-rate discharge performance. From such viewpoints, the density of the positive electrode material is preferably 3.8 to 5.0 g/cm$^3$, more preferably 4.0 to 4.8 g/cm$^3$, and further preferably 4.2 to 4.6 g/cm$^3$. The above described density of the positive electrode material is a density of the positive electrode material after the formation. The density of the positive electrode material can be adjusted, for example, by the amount of water added when the below-mentioned positive electrode material paste is prepared.

The porosity of the positive electrode material is preferably 50% by volume or more, and more preferably 55% by volume or more, from the viewpoints that a region increases in which sulfuric acid enters a pore portion (pore) in the positive electrode material, and that the capacity easily increases. The upper limit of the porosity of the positive electrode material is not limited in particular, but is preferably 70% by volume or less, from the viewpoint that the amount in which the pore portion in the positive electrode material is impregnated with sulfuric acid is adequate, and a bonding force between the active materials can be easily adequately kept. The upper limit of the porosity is more preferably 60% by volume or less, in view of practical use. The porosity of the positive electrode material is a value (percentage based on volume) which is obtained from mercury porosimeter measurement for the positive electrode material after the formation. The porosity of the positive electrode material can be adjusted by the amount of dilute sulfuric acid added when the positive electrode material paste is prepared.

The average particle size of the positive electrode active material is preferably 0.3 μm or more, more preferably 0.5 μm or more, and further preferably 0.7 μm or more, in view of further improving the charge acceptability and the cycle performance. The average particle size of the positive electrode active material is preferably 2.5 μm or less, more preferably 2 μm or less, and further preferably 1.5 μm or less, in view of further improving the cycle performance. The above described average particle size of the positive electrode active material is an average particle size of the positive electrode active material in the positive electrode material after the formation. As for the average particle size of the positive electrode active material, for example, a numerical value can be used which is obtained by operations of: acquiring a scanning electron microscopic photograph (1000 magnifications) of the positive electrode material in a range of 10 μm in length × 10 μm in width, in the central portion of the positive electrode after the formation; and then arithmetically averaging the values of long-side lengths of all the positive electrode active material particles in the image.

The positive electrode material can contain an additive. Examples of the additive include a carbon material (carbonaceous conductive material) and a short fiber for reinforcement (acrylic fiber, polyethylene fiber, polypropylene fiber, polyethylene terephthalate fiber, carbon fiber and the like). Examples of the carbon material include carbon black and graphite. Examples of the carbon black include furnace black, channel black, acetylene black, thermal black and Ketchen black (registered trademark).

In the positive electrode production step, for example, a positive electrode (positive electrode plate and the like) having an unformed positive electrode material is obtained by filling the positive electrode current collector (for example, current collecting grid (cast grid body, expanded grid body or the like)) with the positive electrode material paste containing a raw material of the positive electrode active material, and then performing aging and drying.

The positive electrode material paste may further contain, for example, other predetermined additives and the like, in addition to the raw material of the positive electrode active material. The additive contained in the positive electrode

material paste may be similar to the additive contained in the positive electrode material. In the positive electrode material paste, the amount of the short fiber for reinforcement blended is preferably 0.005 to 0.3 mass%, and more preferably 0.05 to 0.3 mass%, based on the total mass of the raw materials (lead powder and the like) of the positive electrode material.

It is possible to obtain the positive electrode material in which the specific surface area is 10 $m^2/g$ or more and the ratio ($\alpha$-$PbO_2$/$\beta$-$PbO_2$) between the peak intensities of $\beta$-$PbO_2$ and $\alpha$-$PbO_2$ in the X-ray diffraction pattern is 0.4 or less, for example, according to the following method.

The additive such as the short fiber for reinforcement is added to the lead powder, and dry-mixing is performed to obtain a mixture containing the lead powder. Next, 1 to 11 mass% of water and 22 to 30 mass% of dilute sulfuric acid (specific gravity: 1.34 to 1.55) are added to the above described mixture containing the lead powder, and kneading is performed to produce a positive electrode material paste. Here, the above described amount of the water and dilute sulfuric acid blended is an amount blended based on the total mass of the lead powder and the additives. The dilute sulfuric acid (specific gravity: 1.34 to 1.55) is preferably gradually added in several parts in order to reduce heat generation. In the production of the positive electrode material paste, it is preferable to suppress heat generation as much as possible, because sudden heat generation forms a positive electrode material having a sparse structure and lowers a binding force between the active materials in the life. Then, by the operations of ageing and drying the above described positive electrode material paste to obtain the unformed positive electrode material, and then forming the unformed positive electrode material, it is possible to obtain a positive electrode material in which the specific surface area is 10 $m^2/g$ or more and the ratio ($\alpha$-$PbO_2$/$\beta$-$PbO_2$) between the peak intensities of $\beta$-$PbO_2$ and $\alpha$-$PbO_2$ in the X-ray diffraction pattern is 0.4 or less.

The aging conditions are preferably 15 to 60 hours in an atmosphere at a temperature of 35 to 85°C and a humidity of 50 to 98 RH%. The drying conditions are preferably 15 to 30 hours at a temperature of 45 to 80°C.

(Negative electrode (B))

[Negative electrode current collector]

A current collector similar to the positive electrode can be used as a negative electrode current collector. The compositions and the production methods of the negative electrode current collector and the positive electrode current collector may be identical to or different from each other.

(Negative electrode material) [Component (a): Negative electrode active material]

The negative electrode active material can be obtained by operations of: aging and drying a negative electrode active material paste containing a raw material of the negative electrode active material to thereby obtain an unformed active material; and then performing the formation. Examples of the negative electrode active materials after the formation include spongy lead. The above described spongy lead tends to react with sulfuric acid in the electrolytic solution and gradually turn into lead sulfate ($PbSO_4$). The raw materials of the negative electrode active material include lead powder. Examples of the lead powder include lead powder (mixture of main component PbO powder and scaly metallic lead, in ball mill type lead powder producing machine) which is produced, for example, by a ball mill type lead powder producing machine or a Burton-pot type lead powder producing machine. The unformed negative electrode material consists of, for example, basic lead sulfate, metal lead and a low-grade oxide.

The average particle size of the negative electrode active material is preferably 0.3 $\mu$m or more, more preferably 0.5 $\mu$m or more, and further preferably 0.6 $\mu$m or more, in view of further improving the charge acceptability and the cycle performance. The average particle size of the negative electrode active material is preferably 2 $\mu$m or less, more preferably 1.8 $\mu$m or less, and further preferably 1.5 $\mu$m or less, in view of further improving the cycle performance. The above described average particle size of the negative electrode active material is an average particle size of the negative electrode active material in the negative electrode material after the formation. The average particle size of the negative electrode active material can be obtained as a numerical value which is obtained, for example, by an operation of arithmetically averaging the values of long-side lengths (maximum particle size) of all the active material particles in an image of a scanning electron microscopic photograph (1000 magnifications) of the negative electrode material in a range of 10 $\mu$m in length $\times$ 10 $\mu$m in width, in the central portion of the negative electrode after the formation.

The content of the negative electrode active material is preferably 93 mass% or more, may be 95 mass% or more, and may also be 98 mass% or more, based on the total mass of the negative electrode material, in view of the further excellent battery characteristics (capacity, low-temperature high-rate discharge performance, charge acceptability, cycle performance and the like).

[Component (b): organic compound having sulfone group or sulfonate group]

The negative electrode material of the lead storage battery of the present embodiment further contains a resin having a sulfone group (sulfonic acid group, sulfo group) or a sulfonate group, in view of being capable of improving the charge acceptability, the discharge characteristics and the cycle performance in a further well-balanced manner.
Examples of the component (b) include a bisphenol-based resin, a lignin sulfonic acid, lignin sulfonate, and a naphthalenesulfonic acid-based resin. Among the above compounds, in view of further improving the charge acceptability, the bisphenol-based resin is preferable, and a bisphenol-based resin which is a condensate of: (b1) a bisphenol-based compound; (b2) at least one compound selected from the group consisting of aminoalkylsulfonic acid, an aminoalkylsulfonic acid derivative, aminoarylsulfonic acid and an aminoarylsulfonic acid derivative; and (b3) at least one compound selected from the group consisting of formaldehyde and a formaldehyde derivative is more preferable. The bisphenol-based resin which is the condensate of (b1) to (b3) will be described below in detail.

(Component (b1): bisphenol-based compound)

The bisphenol-based compound is a compound having two hydroxyphenyl groups. Examples of the component (b1) include 2,2-bis(4-hydroxyphenyl)propane (hereinafter referred to as "bisphenol A"), bis(4-hydroxyphenyl)methane, 1,1-bis(4-hydroxyphenyl)ethane, 2,2-bis(4-hydroxyphenyl)hexafluoropropane, 1,1-bis(4-hydroxyphenyl)-1-phenylethane, 2,2-bis(4-hydroxyphenyl)butane, bis(4-hydroxyphenyl)diphenylmethane, 1,1-bis(4-hydroxyphenyl)cyclohexane, 1,1-bis(4-hydroxyphenyl)-3,3,5-trimethylcyclohexane, and bis(4-hydroxyphenyl)sulfone (hereinafter referred to as "bisphenol S"). The component (b1) can be used singly or in combinations of two or more. As for the component (b1), bisphenol A is preferable in view of the further excellent charge acceptability, and bisphenol S is preferable in view of the further excellent discharge characteristics.
As for the component (b1), it is preferable to use the bisphenol A and the bisphenol S together, in view of easily improving the cycle performance, the discharge characteristics and the charge acceptability in a well-balanced manner. In this case, the amount of the bisphenol A to be blended for obtaining the bisphenol-based resin is preferably 70 mol% or more, more preferably 75 mol% or more, and further preferably 80 mol% or more, based on the total amount of the bisphenol A and the bisphenol S, in view of easily improving the cycle performance, the discharge characteristics and the charge acceptability in a well-balanced manner. The amount of the bisphenol A to be blended is preferably 99 mol% or less, more preferably 98 mol% or less, and further preferably 97 mol% or less, based on the total amount of the bisphenol A and the bisphenol S, in view of easily improving the cycle performance, the discharge characteristics and the charge acceptability in a well-balanced manner.
(Component (b2): aminoalkylsulfonic acid, aminoalkylsulfonic acid derivative, aminoarylsulfonic acid and aminoarylsulfonic acid derivative)
Examples of the aminoalkyl sulfones include aminomethanesulfonic acid, 2-aminoethanesulfonic acid, 3-aminopropanesulfonic acid, and 2-methylaminoethanesulfonic acid.
Examples of the aminoalkylsulfonic acid derivatives include a compound formed by replacing a hydrogen atom of the aminoalkylsulfonic acid with an alkyl group (for example, alkyl group having 1 to 5 carbon atoms) or the like, and an alkali metal salt formed by replacing a hydrogen atom of a sulfonic group ($-SO_3H$) of the aminoalkylsulfonic acid with an alkali metal (for example, sodium and potassium).
Examples of the aminoarylsulfonic acid include aminobenzene sulfone, and aminonaphthalenesulfonic acid. Examples of the aminoarylsulfonic acid derivatives include aminobenzenesulfonic acid derivatives, and aminonaphthalenesulfonic acid derivatives.
Examples of the aminobenzenesulfon include 2-aminobenzenesulfonic acid (also known as orthanilic acid), 3-aminobenzenesulfonic acid (also known as metanilic acid), and 4-aminobenzenesulfonic acid (also known as sulfanilic acid).
Examples of the aminobenzenesulfonic acid derivatives include a compound formed by replacing part of a hydrogen atom of the aminobenzenesulfonic acid with an alkyl group (for example, alkyl group having 1 to 5 carbon atoms), and an alkali metal salt (sodium salt, potassium salt or the like) formed by replacing a hydrogen atom of a sulfonic group ($-SO_3H$) of the aminobenzenesulfonic acid with an alkali metal (for example, sodium and potassium). Examples of the compounds formed by replacing part of hydrogen atoms of the aminobenzenesulfonic acid with an alkyl group include 4-(methylamino) benzenesulfonic acid, 3-methyl-4-aminobenzenesulfonic acid, 3-amino-4-methylbenzene sulfonic acid, 4-(ethylamino) benzenesulfonic acid, and 3-(ethylamino)-4-methylbenzene sulfonic acid. Examples of the compounds formed by replacing the hydrogen atom of the sulfonic group of the aminobenzenesulfonic acid with an alkali metal include sodium 2-aminobenzenesulfonate, sodium 3-aminobenzenesulfonate, sodium 4-aminobenzenesulfonate, potassium 2-aminobenzenesulfonate, potassium 3-aminobenzenesulfonate, and potassium 4-aminobenzenesulfonate.
Examples of the aminonaphthalenesulfonic acids include: aminonaphthalene monosulfonic acids such as 4-amino-1-naphthalenesulfonic acid (p-form), 5-amino-1-naphthalenesulfonic acid (ana-form), 1-amino-6-naphthalenesulfonic acid (ε-form, 5-amino-2-naphthalenesulfonic acid), 6-amino-1-naphthalenesulfonic acid (ε-form), 6-amino-2-naphthalenesulfonic acid (amphi-form), 7-amino-2-naphthalenesulfonic acid, 8-amino-1-naphthalenesulfonic acid (peri-form), and 1-amino-7-naphthalenesulfonic acid (kata-form, 8-amino-2-naphthalenesulfonic acid); aminonaphthalene disufonic acids such as 1-amino-3,8-naphthalene disulfonic acid, 3-amino-2,7-naphthalene disulfonic acid, 7-amino-1,5-naphthalene disulfonic acid, 6-amino-1,3-naphthalene disulfonic acid, and 7-amino-1,3-naphthalene disulfonic acid; and aminonaphthalene trisulfonic acids such as 7-amino-1,3,6-naphthalene trisulfonic acid and 8-amino-1,3,6-naphthalene trisulfonic acid.

Examples of the aminonaphthalenesulfonic acid derivatives include a compound formed by replacing part of hydrogen atoms of the aminonaphthalenesulfonic acid with an alkyl group (for example, alkyl group having 1 to 5 carbon atoms) or the like, and an alkali metal salt (sodium salt, potassium salt or the like) formed by replacing a hydrogen atom of a sulfonic group ($-SO_3H$) of the aminonaphthalenesulfonic acid with an alkali metal (for example, sodium and potassium).

The component (b2) can be used singly or in combinations of two or more. 4-Aminobenzenesulfonic acid is preferable as the component (b2), in view of further improving the cycle performance and the charge acceptability.

The amount of the component (b2) to be blended for obtaining the bisphenol-based resin is preferably 0.5 mol or more, more preferably 0.6 mol or more, further preferably 0.8 mol or more, and particularly preferably 0.9 mol or more, with respect to 1 mol of the component (b1), in view of further improving the discharge characteristics. The amount of the component (b2) to be blended is preferably 1.3 mol or less, more preferably 1.2 mol or less, and further preferably 1.1 mol or less, with respect to 1 mol of the component (b1), in view of easiness to further improve the cycle performance and the discharge characteristics.

(Component (b3): formaldehyde and formaldehyde derivative)

Formaldehyde in formalin (for example, aqueous solution of 37 mass% of formaldehyde) may be used as formaldehyde. Examples of the formaldehyde derivatives include paraformaldehyde, hexamethylenetetramine, and trioxane. The component (b3) can be used singly or in combinations of two or more. Formaldehyde and a formaldehyde derivative may be used together.

As the component (b3), formaldehyde derivatives are preferable, and paraformaldehyde is more preferable, in view of easiness to obtain the excellent cycle performance. Paraformaldehyde has, for example, a structure represented by the following general formula (I).

$$HO(CH_2O)_{n1}H \text{ ...} \qquad \text{(I)}$$

[In formula (I), n1 represents an integer of 2 to 100.]

The amount of the component (b3) to be blended in terms of formaldehyde for obtaining the bisphenol-based resin is preferably 2 mols or more, more preferably 2.2 mols or more, and further preferably 2.4 mols or more, with respect to 1 mol of the component (b1), in view of improving the reactivity of the component (b2). The amount of the component (b3) to be blended in terms of formaldehyde is preferably 3.5 mols or less, more preferably 3.2 mols or less, and further preferably 3 mols or less, with respect to 1 mol of the component (b1), in view of the excellent solubility of the obtained bisphenol-based resin to the solvent.

The bisphenol-based resin preferably has, for example, at least one of a structural unit represented by the following general formula (II) and a structural unit represented by the following general formula (III).

[Chemical Formula 1]

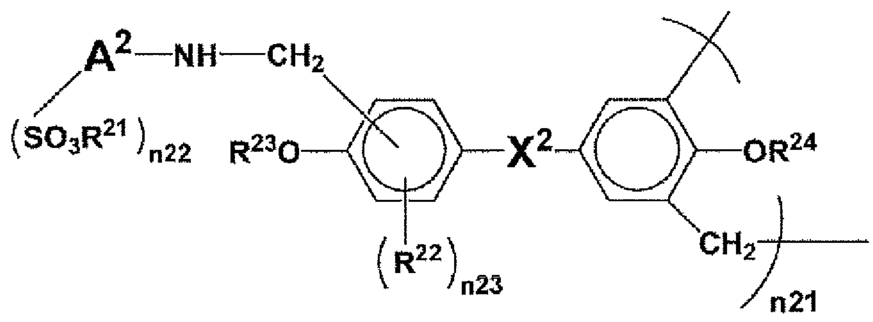

...(II)

[In formula (II), $X^2$ represents a divalent group; $A^2$ represents an alkylene group having 1 to 4 carbon atoms or an arylene

group; $R^{21}$, $R^{23}$ and $R^{24}$ each independently represent an alkali metal or a hydrogen atom; $R^{22}$ represents a methylol group ($-CH_2OH$); n21 represents an integer of 1 to 150; n22 represents an integer of 1 to 3; and n23 represents 0 or 1. Also, the hydrogen atom that is directly bonded to the carbon atom constituting the benzene ring may be substituted with an alkyl group having 1 to 5 carbon atoms.]

[Chemical Formula 2]

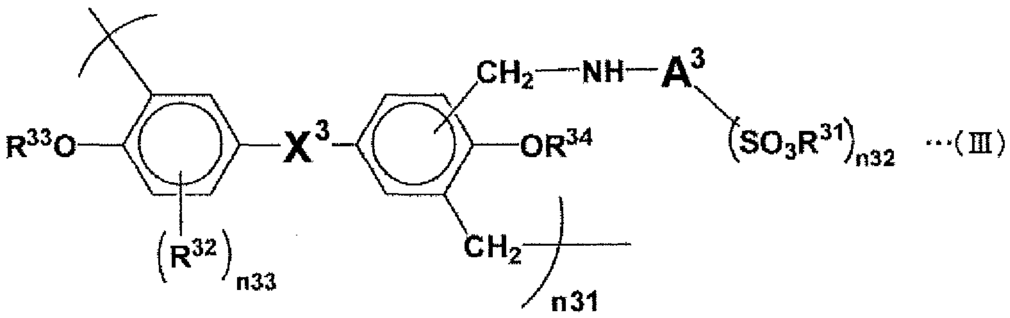

[In the formula (III), $X^3$ represents a divalent group; $A^3$ represents an alkylene group having 1 to 4 carbon atoms or an arylene group; $R^{31}$, $R^{33}$ and $R^{34}$ each independently represent an alkali metal or a hydrogen atom; $R^{32}$ represents a methylol group ($-CH_2OH$); n31 represents an integer of 1 to 150; n32 represents an integer of 1 to 3; and n33 represents 0 or 1. Also, the hydrogen atom that is directly bonded to the carbon atom constituting the benzene ring may be substituted with an alkyl group having 1 to 5 carbon atoms.]

A ratio between the structural unit represented by the formula (II) and the structural unit represented by the formula (III) is not limited in particular, and can vary depending on the synthetic condition or the like. A resin that has only either one of the structural unit represented by the formula (II) and the structural unit represented by the formula (III) may be used for the bisphenol-based resin.

Examples of the above described $X^2$ and $X^3$ include an organic group such as an alkylidene group (methylidene group, ethylidene group, isopropylidene group, sec-butylidene group and the like), a cycloalkylidene group (cyclohexylidene group and the like), and a phenylalkylidene group (diphenylmethylidene group, phenylethylidene group and the like); and a sulfonyl group: and an isopropylidene group ($-C(CH_3)_2-$) group is preferable in view of the further excellent charge acceptability, and a sulfonyl group ($-SO_2-$) is preferable in view of the further excellent discharge characteristics. The $X^2$ and $X^3$ may be substituted with a halogen atom such as a fluorine atom. When the $X^2$ and $X^3$ are the cycloalkylidene group, the hydrocarbon ring may be substituted with an alkyl group or the like.

Examples of $A^2$ and $A^3$ include an alkylene group having 1 to 4 carbon atoms such as a methylene group, an ethylene group, a propylene group and a butylene group; and a divalent arylene group such as a phenylene group and a naphthylene group. The above described arylene group may be substituted with an alkyl group or the like.

Examples of alkali metals of $R^{21}$, $R^{23}$, $R^{24}$, $R^{31}$, $R^{33}$ and $R^{34}$ include sodium and potassium. n21 and n31 are preferably 1 to 150, and more preferably 10 to 150, in view of the further excellent cycle performance and the further excellent solubility to the solvent. n22 and n32 are preferably 1 or 2, and more preferably 1, in view of easily improving the cycle performance, the discharge characteristics and the charge acceptability in a well-balanced manner. n23 and n33 vary depending on the production condition, but n23 and n33 are preferably 0 in view of the further excellent cycle performance and the further excellent storage stability of the bisphenol-based resin.

The weight average molecular weight of the bisphenol-based resin that is the component (b) is preferably 15000 or more, more preferably 30000 or more, further preferably 40000 or more, and particularly preferably 50000 or more, in view of suppressing the elution of the bisphenol-based resin from the electrode to an electrolytic solution in the lead storage battery to thereby easily improve the cycle performance. The weight average molecular weight of the bisphenol-based resin is preferably 70000 or less, more preferably 65000 or less, and further preferably 62000 or less, in view of suppressing the lowering of adsorptivity to an electrode active material and the lowering of dispersibility to thereby easily improve the cycle performance.

The weight average molecular weight of the bisphenol-based resin can be measured, for example, by gel permeation chromatography (hereinafter referred to as "GPC") on the following conditions.

(GPC condition)

Apparatus: High performance liquid chromatograph LC-2200 Plus (made by JASCO Corporation)

Pump: PU-2080
Differential refractometer: RI-2031
Detector: Ultraviolet visible absorptiometer UV-2075 (λ: 254 nm)
Column oven: CO-2065

Column: TSKgel SuperAW (4000), TSKgel SuperAW (3000) and TSKgel SuperAW (2500) (made by Tosoh Corporation)
Column temperature: 40°C
Eluent: Methanol solution containing LiBr (10 mM) and triethylamine (200 mM)
Flow velocity: 0.6 mL/minute
Molecular weight standard sample: polyethylene glycol (molecular weight: $1.10\times10^6$, $5.80\times10^5$, $2.55\times10^5$, $1.46\times10^5$, $1.01\times10^5$, $4.49\times10^4$, $2.70\times10^4$ and $2.10\times10^4$; made by Tosoh Corporation), diethylene glycol (molecular weight: $1.06\times10^2$; made by Kishida Chemical Co., Ltd.), and dibutylhydroxytoluene (molecular weight: $2.20\times10^2$; made by Kishida Chemical Co., Ltd.)

In addition, a commercially available resin can also be used as the bisphenol-based resin. Examples of the commercially available bisphenol-based resin include Bisperse P215 (trade name, made by Nippon Paper Industries Co., Ltd.).

The lignin sulfonate that is the component (b) is a compound in which a part of decomposed products of lignin is sulfonated. The lignin sulfonate has a structural unit derived from lignin, as a structural unit derived from a phenol-based compound. In addition, the lignin sulfonate contains a sulfonate group. The lignin sulfonate can be obtained, for example, from a black liquor which has remained after wood chips have been digested and cellulose has been taken out. The structure of the lignin sulfonate can have a structural unit represented by the following general formula (IV).

[Chemical Formula 3]

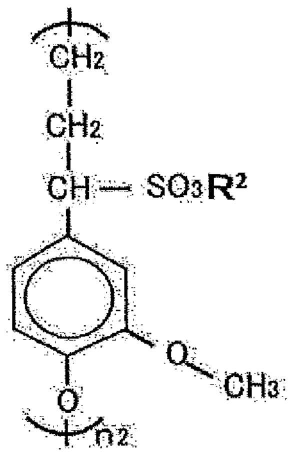

・・・(IV)

[In formula (IV), n2 represents an integer of 1 or more; and $R^2$ represents an alkali metal.]

Examples of the alkali metal of $R^2$ include sodium and potassium. When a plurality of $R^2$ exists, $R^2$ may be identical to or different from each other.

The weight average molecular weight of the lignin sulfonate is preferably 3000 or more, more preferably 7000 or more, and further preferably 8000 or more, in view of suppressing the elution of potassium lignosulfonate from the electrode into the electrolytic solution in the lead storage battery to thereby obtain a further excellent cycle performance. The weight average molecular weight of the lignin sulfonate is preferably 50000 or less, more preferably 30000 or less, and further preferably 20000 or less, in view of the excellent dispersibility of the electrode active material. From these viewpoints, the weight average molecular weight of the lignin sulfonate is preferably 3000 to 50000, more preferably 7000 to 30000, and further preferably 8000 to 20000. The weight average molecular weight of the lignin sulfonate can be measured by a similar method to that for the weight average molecular weight of the bisphenol-based resin.

In addition, a commercially available compound can also be used as the lignin sulfonate. Examples of the commercially available lignin sulfonate include VANILLEX N (trade name, made by Nippon Paper Industries Co., Ltd.).

The naphthalenesulfonic acid-based resin that is the component (b) is a resin having a structural unit derived from a naphthalenesulfonic acid-based compound. The naphthalenesulfonic acid-based resin is, for example, a resin having a naphthalene structure containing a sulfonic group and/or a sulfonate group.

The naphthalenesulfonic acid-based resin can be obtained by reacting a naphthalenesulfonic acid-based compound, and a compound which can be polymerized with the naphthalenesulfonic acid-based compound. The naphthalenesulfonic acid-based resin can be obtained by reacting, for example, the naphthalenesulfonic acid-based compound, and at least one selected from the group consisting of formaldehyde and formaldehyde derivatives. The naphthalenesulfonic acid-based resin preferably has a structural unit represented by the following formula (V).

[Chemical Formula 4]

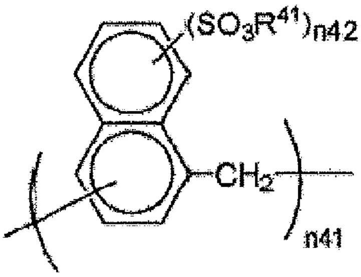

$\cdots$(V)

[In formula (V), $R^{41}$ represents an alkali metal or a hydrogen atom; n41 represents an integer of 1 to 100; and n42 represents an integer of 1 to 3. In addition, a hydrogen atom that is bonded directly to the carbon atom constituting a benzene ring may be substituted with an alkyl group having 1 to 5 carbon atoms.]

Examples of the alkali metal of $R^{41}$ include sodium and potassium. When a plurality of $R^{41}$ exists, $R^{41}$ may be identical to or different from each other.

The weight average molecular weight of the naphthalenesulfonic acid-based resin is preferably 1000 or more, more preferably 3000 or more, further preferably 4000 or more, particularly preferably 5000 or more, extremely preferably 6000 or more, and enormously preferably 8000 or more, in view of easily improving the cycle performance of the lead storage battery. The weight average molecular weight of the naphthalenesulfonic acid-based resin is preferably 20000 or less, more preferably 15000 or less, and further preferably 10000 or less, in view of easily improving the cycle performance. The weight average molecular weight of the naphthalenesulfonic acid-based resin can be measured, for example, in a similar way to that for the weight average molecular weight of the bisphenol-based resin.

In addition, a commercially available resin can also be used as the naphthalenesulfonic acid-based resin. Examples of the commercially available naphthalenesulfonic acid-based resin include VANIOL HDL-100 (trade name, made by Nippon Paper Industries Co., Ltd.), DEMOL N, DEMOL RN, DEMOL NL, DEMOL RNL, DEMOL T and DEMOL T-45 (which are trade names, and made by Kao Corporation).

The content of the component (b) is preferably 0.01 mass% or more, more preferably 0.05 mass% or more, further preferably 0.08 mass% or more, and may be 0.1 mass% or more, in terms of the resin solid content, based on the total mass of the negative electrode material (100 mass%), in view of the further excellent discharge characteristics. The content of the component (b) is preferably 0.3 mass% or less, more preferably 0.2 mass% or less, and further preferably 0.1 mass% or less, in terms of the resin solid content, based on the total mass of the negative electrode material, in view of the further excellent charge acceptability. From such viewpoints, the content of the component (b) is preferably 0.01 to 0.3 mass%, more preferably 0.05 to 0.2 mass%, and further preferably 0.08 to 0.1 mass%.

[Negative electrode additive]

The negative electrode material may further contain an additive. Examples of the additive include barium sulfate, a carbon material (carbonaceous conductive material), and a short fiber for reinforcement (acrylic fiber, polyethylene fiber, polypropylene fiber, polyethylene terephthalate fiber, carbon fiber and the like).

Examples of the carbon material include carbon black and graphite. Examples of the carbon black include furnace black, channel black, acetylene black, thermal black and Ketchen black (registered trademark).

[Physical properties of negative electrode material]

The specific surface area of the negative electrode material is preferably 0.5 $m^2/g$ or more, more preferably 0.55 $m^2/g$ or more, and further preferably 0.6 $m^2/g$ or more, in view of further adequately balancing the excellent charge acceptability with other excellent battery performances (discharge characteristics, cycle performance and the like). The specific surface area of the negative electrode material is preferably 1.2 $m^2/g$ or less, more preferably 1.0 $m^2/g$ or less, and further preferably 0.8 $m^2/g$ or less, in view of further adequately balancing the excellent charge acceptability with

other excellent battery performances (discharge characteristics, cycle performance and the like). The specific surface area of the negative electrode material is preferably 0.5 to 1.2 $m^2/g$, more preferably 0.6 to 1.0 $m^2/g$, and further preferably 0.6 to 0.8 $m^2/g$, in view of further adequately balancing the excellent charge acceptability with other excellent battery performances (discharge characteristics, cycle performance and the like). The above described specific surface area of the negative electrode material is the specific surface area of the negative electrode material after the formation. The specific surface area of the negative electrode material can be adjusted, for example, by a method of adjusting the amounts of sulfuric acid and water added when the negative electrode material paste is prepared, a method of refining the active material at a stage where the active material is unformed, a method of changing a formation condition, and the like. The specific surface area of the negative electrode material can be measured, for example, by the BET method.

(Current collector)

Examples of the production method for the current collector include a casting method and an expanding method. Examples of the material of the current collector include a lead-calcium-tin-based alloy and a lead-antimony-based alloy. A small amount of selenium, silver, bismuth or the like can be added thereto. The production methods for or the materials of the current collectors of the positive electrode and the negative electrode may be identical to or different from each other.

<Method for producing lead storage battery>

The production method for the lead storage battery of the present embodiment comprises, for example, an electrode production step of obtaining the electrodes (positive electrode and negative electrode, for example, electrode plates); and an assembling step of assembling constituent members including the above described electrodes to obtain the lead storage battery. When the electrode is unformed, the electrode has, for example, an electrode material (positive electrode material or negative electrode material) containing a raw material of the electrode active material (positive electrode active material or negative electrode active material) and the like, and the current collector (positive electrode current collector or negative electrode current collector) supporting the electrode material. The electrode after formation has, for example, the electrode material containing the electrode active material and the like, and the current collector which becomes an electroconductive path of an electric current from the electrode material and supports the electrode material.

In the production method for the lead storage battery, for example, the unformed negative electrode and the unformed positive electrode that have been produced as described above are layered via a separator, and the current collecting portions of the polar plates that have the same polarity are welded to each other with a strap, to thereby obtain a polar plate group. This polar plate group is arranged in a battery case to produce an unformed battery. Next, the dilute sulfuric acid is poured into the unformed battery, and then a direct current is passed to perform the formation in the battery case. The lead storage battery is obtained by adjusting the specific gravity of the sulfuric acid after the formation to an appropriate specific gravity of the electrolytic solution. The formation conditions and the specific gravity of the sulfuric acid can be adjusted according to the properties of the electrode active material.

The above described separator has preferably a sack shape such as to wrap each electrode. The material of the separator used for the liquid type lead storage battery is not limited in particular, as long as the material blocks electric connection between the positive electrode plate and the negative electrode plate and permeates sulfate ions of the electrolytic solution therethrough. Specific examples of the material include microporous polyethylene; and a substance formed of a glass fiber and a synthetic resin. It is preferable to cut the separator so as to match the length of the negative electrode (negative electrode plate and the like), in the step of layering the electrodes (polar plates and the like). In addition, the above described cut separator may have a form in which the separator is folded in two, and after both sides have been crimped, thereby wraps the negative electrode. The thickness of the separator used in the liquid type lead storage battery is preferably 0.7 to 1.1 mm.

The formation conditions and the specific gravity of the sulfuric acid can be adjusted according to the sizes of the electrodes. In addition, the formation treatment is not limited to be performed after the assembling step, but may be performed in the electrode production step (tank formation).

The battery case is a member which can accommodate electrodes (polar plates and the like) in its inside. The battery case is preferably a member that has a box body of which the upper face is opened and has a lid body which covers the upper face of the box body, in view of easily accommodating the electrode therein. An adhesive, thermal welding, laser welding, ultrasonic welding and the like can be appropriately used in bonding of the box body to the lid body. The shape of the battery case is not limited in particular, but a rectangular shape is preferable so that the ineffective space becomes small when the electrode (polar plate that is plate-shaped body, and the like) is accommodated in the battery case.

The material of the battery case is not limited in particular, but needs to be resistant to the electrolytic solution (dilute sulfuric acid and the like). Specific examples of the material of the battery case include PP (polypropylene), PE

(polyethylene) and an ABS resin. When the material of the battery case is PP, the battery case is advantageous in terms of acid resistance, workability (in case of ABS resin, heat welding between battery case and lid is difficult) and the cost.

When the battery case consists of the box body and the lid body, the materials of the box body and the lid body may be identical materials to each other, or may be different materials from each other, but the materials having equal coefficient of thermal expansion are preferable, in view of preventing the generation of an undue stress.

The mass ratio (positive electrode material / negative electrode material) between the positive electrode material and the negative electrode material after the formation is preferably 0.9 or more, more preferably 1 or more, and further preferably 1.05 or more, in view of easily obtaining the high charge acceptability. The mass ratio (positive electrode material / negative electrode material) between the positive electrode material and the negative electrode material is preferably 1.3 or less, more preferably 1.2 or less, and further preferably 1.15 or less, in view of easily obtaining the high low-temperature high-rate discharge performance. The mass ratio (positive electrode material / negative electrode material) between the positive electrode material and the negative electrode material is preferably 0.9 to 1.3, more preferably 1.0 to 1.2, and further preferably 1.05 to 1.15, in view of easily obtaining the sufficient battery capacity and also easily obtaining the high charge acceptability and the low-temperature high-rate discharge performance.

**Example**

The present invention will be specifically described below with reference to examples. However, the present invention is not limited to only the following examples.

<Example 1>

(Production of positive electrode plate)

To lead powder, 0.25 mass% (based on total mass of lead powder) of an acrylic fiber was added as a short fiber for reinforcement, and dry-mixing was performed. Next, 9 mass% of water and 25 mass% of dilute sulfuric acid (specific gravity of 1.34) were added to the above described mixture containing the lead powder, and kneading was performed for 1 hour to produce a positive electrode material paste. When the positive electrode material paste was produced, the dilute sulfuric acid (specific gravity of 1.34) was added step by step so as to avoid a rapid temperature rise. The amount of the above described water and the dilute sulfuric acid blended was an amount blended based on the total mass of the lead powder and the short fiber for reinforcement.

An expanded grid body (positive electrode current collector) which was produced by an operation of subjecting a rolled sheet made from a lead alloy to expand working was filled with the above described positive electrode material paste. Subsequently, the positive electrode current collector which was filled with the positive electrode material paste was aged in an atmosphere of a temperature of 50°C and a humidity of 98% for 24 hours. After that, drying was performed at a temperature of 50°C for 16 hours to produce an unformed positive electrode plate having an unformed positive electrode material.

(Production of negative electrode plate)

Lead powder was used as a raw material of the negative electrode active material. A mixture was added to the above described lead powder wherein the mixture contained a condensate of bisphenol, aminobenzenesulfonic acid and formaldehyde (trade name: Bisperse P215, made by Nippon Paper Industries Co., Ltd.; amount blended: 0.2 mass% in terms of resin solid content, and weight average molecular weight: 54000), a short fiber for reinforcement (acrylic fiber, amount blended: 0.1 mass%), barium sulfate (amount blended: 1.0 mass%), and carbonaceous conductive material (furnace black, amount blended: 0.2 mass%); and then dry-mixing was performed. The above described amount blended is an amount blended based on the total mass of the raw materials of negative electrode active material. Next, water was added, and then kneading was performed. Subsequently, kneading was performed while dilute sulfuric acid (specific gravity of 1.280) was added little by little, to thereby produce a negative electrode material paste. An expanded grid body (negative electrode current collector) which was produced by an operation of subjecting a rolled sheet made from a lead alloy to expand working was filled with the negative electrode material paste. Subsequently, the negative electrode current collector which was filled with the negative electrode material paste was aged in an atmosphere of a temperature of 50°C and a humidity of 98% for 24 hours. After that, drying was performed to produce an unformed negative electrode plate having an unformed negative material.

The weight average molecular weight of the condensate of bisphenol, aminobenzenesulfonic acid and formaldehyde was measured with GPC under the following conditions.

(GPC condition)

Apparatus: High performance liquid chromatograph LC-2200 Plus (made by JASCO Corporation)

Pump: PU-2080
Differential refractometer: RI-2031
Detector: Ultraviolet visible absorptiometer UV-2075 (λ: 254 nm)
Column oven: CO-2065

Column: TSKgel SuperAW (4000), TSKgel SuperAW (3000) and TSKgel SuperAW (2500) (made by Tosoh Corporation)
Column temperature: 40°C
Eluent: Methanol solution containing LiBr (10 mM) and triethylamine (200 mM)
Flow velocity: 0.6 mL/minute
Molecular weight standard sample: polyethylene glycol (molecular weight: $1.10\times10^6$, $5.80\times10^5$, $2.55\times10^5$, $1.46\times10^5$, $1.01\times10^5$, $4.49\times10^4$, $2.70\times10^4$ and $2.10\times10^4$; made by Tosoh Corporation), diethylene glycol (molecular weight: $1.06\times10^2$; made by Kishida Chemical Co., Ltd.), and dibutylhydroxytoluene (molecular weight: $2.20\times10^2$; made by Kishida Chemical Co., Ltd.)

(Assembly of battery)

The unformed negative electrode plate was inserted into a separator that was made from polyethylene and was formed into a sack shape. Next, five unformed positive electrode plates and six unformed negative electrode plates which were inserted into the above described sack-shaped separator were alternately layered. Subsequently, ear portions of the polar plates having the same polarity were welded to each other by a cast-on strap (COS) method to produce a polar plate group. The above described polar plate group was inserted into the battery case to assemble a 2V single cell battery (which corresponds to single cell of K42 size specified in JIS D 5301). After that, a sulfuric acid solution with a specific gravity of 1.200 was poured into this battery. After that, the battery was left to stand at 40°C for 1 hour, and then was formed with a constant current of 10.5 A under conditions of 20 hours and 40°C, to obtain a lead storage battery. The specific gravity of the electrolytic solution (sulfuric acid solution) after the formation was 1.28. The sulfuric acid solution with a specific gravity of 1.280 was added thereto until the sulfuric acid solution reached the UPPER level.

(Measurement of specific surface area)

The specific surface areas of the positive electrode material and the negative electrode material after the formation were measured according to the following method. Firstly, the lead storage battery after the formation was disassembled, and the positive electrode plate and the negative electrode plate after the formation were taken out. Next, these were washed with water, and then were dried at 50°C for 24 hours. Subsequently, 2 g of each of the positive electrode material and the negative electrode material was collected from each of the center portions of the positive electrode plate and the negative electrode plate, and was dried at 130°C for 30 minutes to obtain the measurement samples. Next, while the obtained sample was cooled with liquid nitrogen, the amount of nitrogen gas adsorbed was measured at a liquid nitrogen temperature according to a multipoint method, and the specific surface areas were calculated according to the BET method. The measurement conditions were as follows. As a result of measuring the specific surface areas in this way, the specific surface area of the positive electrode material was 11.6 $m^2/g$. In addition, the specific surface area of the negative electrode material was 0.6 $m^2/g$.

[Measurement conditions of specific surface area]

Apparatus: Macsorb 1201 (made by Mountech Co., Ltd.)
Degassing time: 10 minutes at 130°C
Cooling: 5 minutes with liquid nitrogen
Adsorption gas flow rate: 25 mL/minute

(Measurement of ratio ($\alpha$-$PbO_2$/$\beta$-$PbO_2$) between peak intensities in X-Ray diffraction pattern)

The measurement sample was produced according to the following procedure. Firstly, the formed battery was disassembled; the positive electrode plate was taken out and was washed with water; and then was dried at 50°C for 24 hours. Next, 3 g of the positive electrode material was collected from the center portion of the above described positive electrode plate, and was ground, and was filled so as to be equal to the depth of the sample holder, to form a smooth

sample surface; and the measurement was performed. The measurement apparatus, the measurement conditions, the calculation method and the like for the $\alpha$-$PbO_2$/$\beta$-$PbO_2$ ratio will be described below.

- Measuring apparatus: full automatic multipurpose horizontal type X-ray diffraction apparatus SmartLab (made by Rigaku Corporation)
- X-ray source: Cu-K$\alpha$/1.541862 Å
- Filter: Cu-K$\beta$
- Output: 40 kV, 30 mA
- Scan mode: CONTINUOUS
- Scan range: 20.0000 degrees to 60.0000 degrees
- Step width: 0.0200 degrees
- Scan axis: 2$\theta$/$\theta$
- Scan speed: 10.0000 degrees/minute
- Sample holder: made from glass, depth of 0.2 mm
- Calculation method: as a result of measuring the wide angle X-ray diffraction with the use of 3 g of the produced sample (formed positive electrode material of positive electrode), $\alpha$-$PbO_2$ which was positioned at a diffraction angle of 28.6 degrees and $\beta$-$PbO_2$ which was positioned at a diffraction angle of 25.3 degrees were detected from the obtained X-ray diffraction chart of the diffraction angle (2$\theta$) and diffraction peak intensity. The ratio of "peak intensity of $\alpha$-$PbO_2$"/"peak intensity of $\beta$-$PbO_2$" was calculated as the ratio $\alpha$-$PbO_2$/$\beta$-$PbO_2$, with the use of the peak intensities (cps) of the waveforms specified as the respective chemical compounds of $\alpha$-$PbO_2$ (110 plane) and $\beta$-$PbO_2$ (111 plane). As a result of measuring in this way, the $\alpha$-$PbO_2$/$\beta$-$PbO_2$ ratio was 0.05.

(Calculation of mass ratio of positive electrode material / negative electrode material)

The mass ratio of the positive electrode material / the negative electrode material after the formation was calculated as follows. Firstly, the positive electrode plate after the formation was taken out, was washed with water for 1 hour, and then was dried at 80°C for 24 hours under a nitrogen atmosphere. After the mass of the positive electrode plate was measured, the positive electrode material was taken out and the mass of the grid was determined. The total mass of the positive electrode material was calculated from an amount which was obtained by excluding the mass of the grid from the mass of the positive electrode plate. Concerning the negative electrode plate as well, the total mass of the negative electrode material was calculated in a similar way. The mass ratio of the positive electrode material / the negative electrode material was determined from the total mass of the positive electrode material and the total mass of the negative electrode material per unit cell. As a result of measuring in this way, the mass ratio of the positive electrode material / the negative electrode material was 1.10.

<Example 2>

A lead storage battery was produced in a similar way to that in Example 1, except that the amount of water blended when the positive electrode material paste was produced was changed to 11 mass% (based on total mass of lead powder and short fiber for reinforcement), 23 mass% (based on total mass of lead powder and short fiber for reinforcement) of dilute sulfuric acid (specific gravity: 1.55) was used as dilute sulfuric acid when the positive electrode material paste was produced, and the specific gravity of the sulfuric acid solution poured at the time of the formation was changed to 1.185. The specific gravity of the electrolytic solution (sulfuric acid solution) after the formation was 1.28. In addition, the specific surface areas of the positive electrode material and the negative electrode material, the ratio ($\alpha$-$PbO_2$/$\beta$-$PbO_2$) between the peak intensities in the X-ray diffraction pattern of the positive electrode material, and the mass ratio of the positive electrode material / negative electrode material were measured, according to a similar method to that in Example 1. The specific surface area of the positive electrode material was 12.2 $m^2$/g, and the specific surface area of the negative electrode material was 0.6 $m^2$/g. The ratio ($\alpha$-$PbO_2$/$\beta$-$PbO_2$) between the peak intensities in the X-ray diffraction pattern of the positive electrode material was 0.03. The mass ratio of the positive electrode material / the negative electrode material was 1.10.

<Example 3>

A lead storage battery was produced in a similar way to that in Example 1, except that the amount of water blended when the positive electrode material paste was produced was changed to 3 mass% (based on total mass of lead powder and short fiber for reinforcement), 30 mass% (based on total mass of lead powder and short fiber for reinforcement) of dilute sulfuric acid (specific gravity: 1.55) was used as dilute sulfuric acid when the positive electrode material paste was produced, and the specific gravity of the sulfuric acid solution poured at the time of the formation

was changed to 1.170. The specific gravity of the electrolytic solution (sulfuric acid solution) after the formation was 1.28. In addition, the specific surface areas of the positive electrode material and the negative electrode material, the ratio ($\alpha$-$PbO_2$/$\beta$-$PbO_2$) between the peak intensities in the X-ray diffraction pattern of the positive electrode material, and the mass ratio of the positive electrode material / negative electrode material were measured, according to a similar method to that in Example 1. The specific surface area of the positive electrode material was 12.9 $m^2/g$, and the specific surface area of the negative electrode material was 0.6 $m^2/g$. The ratio ($\alpha$-$PbO_2$/$\beta$-$PbO_2$) between the peak intensities in the X-ray diffraction pattern of the positive electrode material was 0.02. The mass ratio of the positive electrode material / the negative electrode material was 1.10.

<Example 4>

A lead storage battery was produced in a similar way to that in Example 1, except that a standing temperature before current passing was set at 45°C, and the temperature condition during the current passing was changed to 45°C, at the time of the formation. In addition, the specific surface areas of the positive electrode material and the negative electrode material, the ratio ($\alpha$-$PbO_2$/$\beta$-$PbO_2$) between the peak intensities in the X-ray diffraction pattern of the positive electrode material, and the mass ratio of the positive electrode material / negative electrode material were measured, according to a similar method to that in Example 1. The specific surface area of the positive electrode material was 10.5 $m^2/g$, and the specific surface area of the negative electrode material was 0.6 $m^2/g$. The ratio ($\alpha$-$PbO_2$/$\beta$-$PbO_2$) between the peak intensities in the X-ray diffraction pattern of the positive electrode material was 0.05. The mass ratio of the positive electrode material / the negative electrode material was 1.10.

<Example 5>

A lead storage battery was produced in a similar way to that in Example 1, except that the negative electrode additive was changed from Bisperse P215 to lignin sulfonate (trade name: VANILLEX N, made by Nippon Paper Industries Co., Ltd., amount blended: 0.2 mass% in terms of resin solid content, and weight average molecular weight (measured by GPC under the same conditions as in Example 1): 17000). In addition, the specific surface areas of the positive electrode material and the negative electrode material, the ratio ($\alpha$-$PbO_2$/$\beta$-$PbO_2$) between the peak intensities in the X-ray diffraction pattern, and the mass ratio of the positive electrode material / negative electrode material were measured, according to a similar method to that in Example 1. The specific surface area of the positive electrode material was 11.6 $m^2/g$, and the specific surface area of the negative electrode material was 0.6 $m^2/g$. The ratio ($\alpha$-$PbO_2$/$\beta$-$PbO_2$) between the peak intensities in the X-ray diffraction pattern of the positive electrode material was 0.05. The mass ratio of the positive electrode material / the negative electrode material was 1.10.

<Example 6>

A lead storage battery was produced in a similar way to that in Example 1, except that the negative electrode additive was changed from Bisperse P215 to a naphthalene sulfonic acid-based resin (trade name: VANIOL HDL-100, made by Nippon Paper Industries Co., Ltd., amount blended: 0.2 mass% in terms of resin solid content, and weight average molecular weight (measured by GPC under the same conditions as in Example 1): 8000). In addition, the specific surface areas of the positive electrode material and the negative electrode material, the ratio ($\alpha$-$PbO_2$/$\beta$-$PbO_2$) between the peak intensities in the X-ray diffraction pattern of the positive electrode material, and the mass ratio of the positive electrode material / negative electrode material were measured, according to a similar method to that in Example 1. The specific surface area of the positive electrode material was 11.6 $m^2/g$, and the specific surface area of the negative electrode material was 0.6 $m^2/g$. The ratio ($\alpha$-$PbO_2$/$\beta$-$PbO_2$) between the peak intensities in the X-ray diffraction pattern of the positive electrode material was 0.05. The mass ratio of the positive electrode material / the negative electrode material was 1.10.

<Example 7>

A lead storage battery was produced in a similar way to that in Example 1, except that the amount of the negative electrode additive Bisperse P215 blended was changed to 0.1 mass%. In addition, the specific surface areas of the positive electrode material and the negative electrode material, the ratio ($\alpha$-$PbO_2$/$\beta$-$PbO_2$) between the peak intensities in the X-ray diffraction pattern of the positive electrode material, and the mass ratio of the positive electrode material / negative electrode material were measured, according to a similar method to that in Example 1. The specific surface area of the positive electrode material was 11.6 $m^2/g$, and the specific surface area of the negative electrode material was 0.6 $m^2/g$. The ratio ($\alpha$-$PbO_2$/$\beta$-$PbO_2$) between the peak intensities in the X-ray diffraction pattern of the positive electrode material was 0.05. The mass ratio of the positive electrode material / the negative electrode material

was 1.10.

<Example 8>

A lead storage battery was produced in a similar way to that in Example 7, except that the mass ratio of the positive electrode material / the negative electrode material was changed to 1.15 by adjustment of the mass of the negative electrode material. In addition, the specific surface areas of the positive electrode material and the negative electrode material, the ratio ($\alpha$-$PbO_2$/$\beta$-$PbO_2$) between the peak intensities in the X-ray diffraction pattern of the positive electrode material, and the mass ratio of the positive electrode material / negative electrode material were measured, according to a similar method to that in Example 1. The specific surface area of the positive electrode material was 11.6 $m^2/g$, and the specific surface area of the negative electrode material was 0.6 $m^2/g$. The ratio ($\alpha$-$PbO_2$/$\beta$-$PbO_2$) between the peak intensities in the X-ray diffraction pattern of the positive electrode material was 0.05.

<Example 9>

A lead storage battery was produced in a similar way to that in Example 1, except that the amount of the negative electrode additive Bisperse P215 blended was changed to 0.15 mass%. In addition, the specific surface areas of the positive electrode material and the negative electrode material, the ratio ($\alpha$-$PbO_2$/$\beta$-$PbO_2$) between the peak intensities in the X-ray diffraction pattern of the positive electrode material, and the mass ratio of the positive electrode material / negative electrode material were measured, according to a similar method to that in Example 1. The specific surface area of the positive electrode material was 11.6 $m^2/g$, and the specific surface area of the negative electrode material was 0.6 $m^2/g$. The ratio ($\alpha$-$PbO_2$/$\beta$-$PbO_2$) between the peak intensities in the X-ray diffraction pattern of the positive electrode material was 0.05. The mass ratio of the positive electrode material / the negative electrode material was 1.10.

<Example 10>

A lead storage battery was produced in a similar way to that in Example 1, except that the mass ratio of the positive electrode material / the negative electrode material was changed to 1.15 by the adjustment of the mass of the positive electrode material. In addition, the specific surface areas of the positive electrode material and the negative electrode material, the ratio ($\alpha$-$PbO_2$/$\beta$-$PbO_2$) between the peak intensities in the X-ray diffraction pattern of the positive electrode material, and the mass ratio of the positive electrode material / negative electrode material were measured, according to a similar method to that in Example 1. The specific surface area of the positive electrode material was 11.6 $m^2/g$, and the specific surface area of the negative electrode material was 0.6 $m^2/g$. The ratio ($\alpha$-$PbO_2$/$\beta$-$PbO_2$) between the peak intensities in the X-ray diffraction pattern of the positive electrode material was 0.05.

<Example 11>

A lead storage battery was produced in a similar way to that in Example 1, except that the amount of the negative electrode additive Bisperse P215 blended was changed to 0.3 mass%. In addition, the specific surface areas of the positive electrode material and the negative electrode material, the ratio ($\alpha$-$PbO_2$/$\beta$-$PbO_2$) between the peak intensities in the X-ray diffraction pattern of the positive electrode material, and the mass ratio of the positive electrode material / negative electrode material were measured, according to a similar method to that in Example 1. The specific surface area of the positive electrode material was 11.6 $m^2/g$, and the specific surface area of the negative electrode material was 0.6 $m^2/g$. The ratio ($\alpha$-$PbO_2$/$\beta$-$PbO_2$) between the peak intensities in the X-ray diffraction pattern of the positive electrode material was 0.05. The mass ratio of the positive electrode material / the negative electrode material was 1.10.

<Example 12>

A lead storage battery was produced in a similar way to that in Example 1, except that the amount of water blended when the positive electrode material paste was produced was changed to 12 mass% (based on total mass of lead powder and short fiber for reinforcement), 15 mass% (based on total mass of lead powder and short fiber for reinforcement) of dilute sulfuric acid (specific gravity: 1.28) was used as dilute sulfuric acid when the positive electrode material paste was produced, the specific gravity of the sulfuric acid solution poured at the time of the formation was changed to 1.23, a standing time before the current passing was set at 5 hours, and the formation was performed with a constant current of 7.5 A under conditions of 20 hours and 40°C. The specific gravity of the electrolytic solution (sulfuric acid solution) after the formation was 1.28. In addition, the specific surface areas of the positive electrode material and

the negative electrode material, the ratio ($\alpha$-$PbO_2$/$\beta$-$PbO_2$) between the peak intensities in the X-ray diffraction pattern of the positive electrode material, and the mass ratio of the positive electrode material / negative electrode material were measured, according to a similar method to that in Example 1. The specific surface area of the positive electrode material was 10.3 $m^2$/g, and the specific surface area of the negative electrode material was 0.6 $m^2$/g. The ratio ($\alpha$-$PbO_2$/$\beta$-$PbO_2$) between the peak intensities in the X-ray diffraction pattern of the positive electrode material was 0.38. The mass ratio of the positive electrode material / the negative electrode material was 1.10.

<Example 13>

A lead storage battery was produced in a similar way to that in Example 12, except that the specific gravity of the sulfuric acid solution poured at the time of the formation was changed to 1.25. The specific gravity of the electrolytic solution (sulfuric acid solution) after the formation was 1.30. Water was added thereto to adjust the specific gravity to 1.28, and then the sulfuric acid solution with the specific gravity of 1.280 was added thereto until the sulfuric acid solution reached the UPPER level. In addition, the specific surface areas of the positive electrode material and the negative electrode material, the ratio ($\alpha$-$PbO_2$/$\beta$-$PbO_2$) between the peak intensities in the X-ray diffraction pattern of the positive electrode material, and the mass ratio of the positive electrode material / negative electrode material were measured, according to a similar method to that in Example 1. The specific surface area of the positive electrode material was 10.6 $m^2$/g, and the specific surface area of the negative electrode material was 0.6 $m^2$/g. The ratio ($\alpha$-$PbO_2$/$\beta$-$PbO_2$) between the peak intensities in the X-ray diffraction pattern of the positive electrode material was 0.35. The mass ratio of the positive electrode material / the negative electrode material was 1.10.

<Comparative Example 1>

A lead storage battery was produced in a similar way to that in Example 12, except that the standing time before the current passing at the time of the formation was changed to 1 hour. The specific gravity of the electrolytic solution (sulfuric acid solution) after the formation was 1.28. In addition, the specific surface areas of the positive electrode material and the negative electrode material, the ratio ($\alpha$-$PbO_2$/$\beta$-$PbO_2$) between the peak intensities in the X-ray diffraction pattern of the positive electrode material, and the mass ratio of the positive electrode material / negative electrode material were measured, according to a similar method to that in Example 1. The specific surface area of the positive electrode material was 8.9 $m^2$/g, and the specific surface area of the negative electrode material was 0.6 $m^2$/g. The ratio ($\alpha$-$PbO_2$/$\beta$-$PbO_2$) between the peak intensities in the X-ray diffraction pattern of the positive electrode material was 0.42. The mass ratio of the positive electrode material / the negative electrode material was 1.10.

<Comparative Example 2>

A lead storage battery was produced in a similar way to that in Comparative Example 1, except that the standing temperature before the current passing was changed to 25°C, and the temperature condition during the current passing was changed to 25°C, at the time of the formation. In addition, the specific surface areas of the positive electrode material and the negative electrode material, the ratio ($\alpha$-$PbO_2$/$\beta$-$PbO_2$) between the peak intensities in the X-ray diffraction pattern of the positive electrode material, and the mass ratio of the positive electrode material / negative electrode material were measured, according to a similar method to that in Example 1. The specific surface area of the positive electrode material was 10.5 $m^2$/g, and the specific surface area of the negative electrode material was 0.6 $m^2$/g. The ratio ($\alpha$-$PbO_2$/$\beta$-$PbO_2$) between the peak intensities in the X-ray diffraction pattern of the positive electrode material was 0.42. The mass ratio of the positive electrode material / the negative electrode material was 1.10.

<Comparative Example 3>

A lead storage battery was produced in a similar way to that in Example 1, except that the negative electrode additive was changed from Bisperse P215 to Aniline (trade name: Aniline, made by Wako Pure Chemical Industries, Ltd., amount blended: 0.2 mass% in terms of resin solid content). In addition, the specific surface areas of the positive electrode material and the negative electrode material, the ratio ($\alpha$-$PbO_2$/$\beta$-$PbO_2$) between the peak intensities in the X-ray diffraction pattern of the positive electrode material, and the mass ratio of the positive electrode material / negative electrode material were measured, according to a similar method to that in Example 1. The specific surface area of the positive electrode material was 11.6 $m^2$/g, and the specific surface area of the negative electrode material was 0.6 $m^2$/g. The ratio ($\alpha$-$PbO_2$/$\beta$-$PbO_2$) between the peak intensities in the X-ray diffraction pattern of the positive electrode material was 0.05. The mass ratio of the positive electrode material / the negative electrode material was 1.10.

<Characteristic evaluation>

(Charge acceptability)

The charge acceptability of the produced lead storage battery was evaluated according to the following method. Firstly, the lead storage battery immediately after the formation was left approximately for 12 hours, and then a constant current discharging with a current value of 5.6 A was performed at 25°C for 30 minutes. The battery was further left for 6 hours, and then was charged at a constant voltage of 2.33 V with a limit current of 100 A for 60 seconds; and values of an electric current having passed until the 5th second from the start were measured. The charge acceptability was relatively evaluated assuming that the measurement result of Comparative Example 1 was 100. The results are shown in Table 1.

(Low-temperature high-rate discharge performance)

The battery temperature of the produced lead storage battery was adjusted to -15°C, then the constant current discharging was performed at 150 A, and the discharge duration time was measured until the cell voltage fell below 1.0 V. The low-temperature high-rate discharge performance was relatively evaluated assuming that the measurement result of Comparative Example 1 was 100. The results are shown in Table 1.

(ISS cycle performance)

The ISS cycle performance was measured in the following way. The ambient temperature was adjusted so that the battery temperature became 25°C. A test was performed for 7200 cycles wherein one cycle is an operation of performing the constant current discharging at 45 A for 59 seconds and at 300 A for one second, and then performing the constant current / constant voltage charging at 100 A and 2.33 V for 60 seconds. This test is a cycle test which simulates the way how the lead storage battery is used in an ISS vehicle. In this cycle test, the charge amount is small with respect to the discharge amount, and therefore, the charge becomes gradually insufficient if the charging is not completely performed. As a result, the voltage at the first second gradually decreases when the battery was discharged for one second at a discharge current which was set at 300 A. Specifically, when the negative electrode is polarized during the constant current / constant voltage charging, and is switched to the constant voltage charging at an early stage, the charging current decays and the charge becomes insufficient. In this cycle test, the performance was considered to be "A" when the voltage at the first second at the time of 300 A discharge after 7200 cycles was 1.2 V or more, and the performance was considered to be "B" when it was below 1.2 V. The results are shown in Table 1.

(Evaluation of amount of electrolytic solution reduced by overcharge)

The overcharge at a constant voltage of 2.4 V was performed at an ambient temperature (temperature of water tank) of 60°C, for 42 days. The mass of the lead storage battery was measured before and after this charging. Thereby, the amount of the electrolytic solution reduced by the charging (amount of liquid reduced) was determined. The amount reduced was relatively evaluated assuming that the amount reduced in Comparative Example 3 was 100. The smaller this value is, the more unlikely the electrolytic solution is to be reduced by the overcharge, in other words, the higher the suppressing effect on the reduction of the liquid is.

[Table 1]

| | Positive electrode material | | Negative electrode material | | Battery structure | | | Battery performance | | | |
|---|---|---|---|---|---|---|---|---|---|---|---|
| | Specific surface area ($m^2/g$) | $\alpha/\beta$ | Organic compound | Amount added (%) | +/- ratio | Positive electrode active material content (mass%) | Negative electrode active material content (mass%) | Charge acceptability (%) | Low-temperature high-rate discharge performance (%) | ISS cycle performance | Amount of liquid reduced (%) |
| Example 1 | 11.6 | 0.05 | P215 | 0.2 | 1.10 | 99.75 | 98.62 | 115 | 120 | A | 91 |
| Example 2 | 12.2 | 0.03 | P215 | 0.2 | 1.10 | 99.75 | 98.62 | 120 | 122 | A | 91 |
| Example 3 | 12.9 | 0.02 | P215 | 0.2 | 1.10 | 99.75 | 98.62 | 125 | 125 | A | 91 |
| Example 4 | 10.5 | 0.05 | P215 | 0.2 | 1.10 | 99.75 | 98.62 | 110 | 117 | A | 91 |
| Example 5 | 11.6 | 0.05 | VANILLEX | 0.2 | 1.10 | 99.75 | 98.62 | 105 | 135 | A | 59 |
| Example 6 | 11.6 | 0.05 | VANIOL | 0.2 | 1.10 | 99.75 | 98.62 | 100 | 140 | A | 59 |
| Example 7 | 11.6 | 0.05 | P215 | 0.1 | 1.10 | 99.75 | 98.72 | 125 | 112 | A | 95 |
| Example 8 | 11.6 | 0.05 | P215 | 0.1 | 1.15 | 99.75 | 98.72 | 127 | 112 | A | 95 |
| Example 9 | 11.6 | 0.05 | P215 | 0.15 | 1.10 | 99.75 | 98.67 | 120 | 116 | A | 93 |
| Example 10 | 11.6 | 0.05 | P215 | 0.2 | 1.15 | 99.75 | 98.62 | 117 | 120 | A | 91 |
| Example 11 | 11.6 | 0.05 | P215 | 0.3 | 1.10 | 99.75 | 98.52 | 107 | 130 | A | 73 |
| Example 12 | 10.3 | 0.38 | P215 | 0.2 | 1.10 | 99.75 | 98.62 | 108 | 110 | A | 91 |
| Example 13 | 10.6 | 0.35 | P215 | 0.2 | 1.10 | 99.75 | 98.62 | 112 | 115 | A | 91 |
| Comparative Example 1 | 8.9 | 0.42 | P215 | 0.2 | 1.10 | 99.75 | 98.62 | 100 | 100 | A | 91 |
| Comparative Example 2 | 10.5 | 0.42 | P215 | 0.2 | 1.10 | 99.75 | 98.62 | 105 | 90 | A | 91 |
| Comparative Example 3 | 11.6 | 0.05 | Aniline | 0.2 | 1.10 | 99.75 | 98.62 | 110 | 70 | A | 100 |

In Table 1, "α/β" means the ratio ($\alpha$-$PbO_2$/$\beta$-$PbO_2$) of the peak intensities between $\beta$-$PbO_2$ and $\alpha$-$PbO_2$ in the X-ray diffraction pattern. "+/- Ratio" means the mass ratio (positive electrode material / negative electrode material) between the mass of the positive electrode material and the mass of the negative electrode material. "The content of the positive electrode active material" means the content (based on mass of positive electrode material) of the positive electrode active material in the positive electrode material, and the "content of the negative electrode active material" means the content (based on mass of negative electrode material) of the negative electrode active material in the negative electrode material.

## Industrial Applicability

According to the lead storage battery of the present disclosure, it is possible to attain both of the excellent charge acceptability and the low-temperature high-rate discharge performance at the sufficiently high level. In addition, according to the lead storage battery of the present disclosure, it is possible to keep the SOC at an appropriate level, which tends to become low in the ISS vehicle, the micro-hybrid vehicle and the like, particularly after the charge and discharge has been repeated to some extent from the initial state and the active material has been sufficiently activated.

According to the present disclosure, it is possible to provide an application of the lead storage battery to the micro-hybrid vehicle. According to the present disclosure, it is possible to provide the application of the lead storage battery to the ISS vehicle.

## Reference Signs List

1 ··· lead storage battery, 12 ··· positive electrode plate (positive electrode), 13 ··· negative electrode plate (negative electrode).

## Claims

1. A lead storage battery comprising:

   a positive electrode having a positive electrode material containing $\beta$-$PbO_2$ and $\alpha$-$PbO_2$;
   a negative electrode having a negative electrode material containing an organic compound having at least one selected from the group consisting of a sulfone group and a sulfonate group, wherein
   a specific surface area of the positive electrode material is 10 $m^2/g$ or more, wherein the specific surface area is measured by a BET method using nitrogen gas, and
   a ratio ($\alpha$-$PbO_2$/$\beta$-$PbO_2$) between peak intensities of $\beta$-$PbO_2$ and $\alpha$-$PbO_2$ in an X-ray diffraction pattern in the positive electrode material is 0.4 or less, wherein the peak intensity of $\alpha$-$PbO_2$ is that of the 110 plane and the peak intensity of $\beta$-$PbO_2$ is that of the 111 plane.

2. The lead storage battery according to claim 1, wherein a content of the organic compound in the negative electrode material is 0.3 mass% or less when a total mass of the negative electrode material is 100 mass%.

3. The lead storage battery according to claim 1 or 2, wherein a content of the organic compound in the negative electrode material is 0.1 mass% or more when a total mass of the negative electrode material is 100 mass%.

4. The lead storage battery according to any one of claims 1 to 3, wherein a mass ratio (positive electrode material / negative electrode material) between a mass of the positive electrode material and a mass of the negative electrode material is 1.3 or less.

5. The lead storage battery according to any one of claims 1 to 4, wherein
   the positive electrode material contains a positive electrode active material, and a content of the positive electrode active material based on a mass of the positive electrode material is 95 mass% or more; and the negative electrode material contains a negative electrode active material, and a content of the negative electrode active material based on a mass of the negative electrode material is 93 mass% or more.

6. A micro-hybrid vehicle comprising the lead storage battery according to any one of claims 1 to 5.

7. A start-stop system vehicle comprising the lead storage battery according to any one of claims 1 to 5.

## Patentansprüche

1. Bleiakkumulator, umfassend:

   eine positive Elektrode mit einem positiven Elektrodenmaterial, das $\beta$-$PbO_2$ und $\alpha$-$PbO_2$ enthält,
   eine negative Elektrode mit einem negativen Elektrodenmaterial, das eine organische Verbindung mit mindestens einer, ausgewählt aus der Gruppe bestehend aus einer Sulfongruppe und einer Sulfonatgruppe, enthält, wobei
   eine spezifische Oberfläche des positiven Elektrodenmaterials 10 $m^2/g$ oder mehr beträgt, wobei die spezifische Oberfläche durch ein BET-Verfahren unter Verwendung von Stickstoffgas gemessen wird, und
   ein Verhältnis ($\alpha$-$PbO_2$/$\beta$-$PbO_2$) zwischen den Peakintensitäten von $\beta$-$PbO_2$ und $\alpha$-$PbO_2$ in einem Röntgenbeugungsmuster in dem positiven Elektrodenmaterial 0,4 oder weniger beträgt, wobei die Peakintensität von $\alpha$-$PbO_2$ die der 110-Ebene ist und Peakintensität von $\beta$-$PbO_2$ die der 111-Ebene ist.

2. Bleiakkumulator gemäß Anspruch 1, wobei ein Gehalt der organischen Verbindung in dem negativen Elektrodenmaterial 0,3 Masse-% oder weniger beträgt, wenn eine gesamte Masse des Elektrodenmaterials 100 Masse-% beträgt.

3. Bleiakkumulator gemäß Anspruch 1 oder 2, wobei ein Gehalt der organischen Verbindung in dem negativen Elektrodenmaterial 0,1 Masse-% oder mehr beträgt, wenn eine Gesamtmasse des negativen Elektodenmaterials 100 Masse-% beträgt.

4. Bleiakkumulator gemäß irgendeinem der Ansprüche 1 bis 3, wobei ein Masseverhältnis (positives Elektrodenmaterial/negatives Elektrodenmaterial) zwischen einer Masse des positiven Elektrodenmaterials und einer Masse des negativen Elektrodenmaterials 1,3 oder weniger beträgt.

5. Bleiakkumulator gemäß irgendeinem der Ansprüche 1 bis 4, wobei
   das positive Elektrodenmaterial positives Elektrodenaktivmaterial enthält und ein Gehalt des positiven Elektrodenaktivmaterials, bezogen auf eine Masse des positiven Elektrodenmaterials, 95 Masse-% oder mehr beträgt, und das negative Elektrodenmaterial ein negatives Elektrodenaktivmaterial enthält und ein Gehalt des negativen Elektrodenaktivmaterials, bezogen auf eine Masse des negativen Elektrodenmaterials, 93 Masse-% oder mehr beträgt.

6. Mikro-Hybridfahrzeug, umfassend den Bleiakkumulator gemäß irgendeinem der Ansprüche 1 bis 5.

7. Fahrzeug mit Start-Stopp-System, umfassend den Bleiakkumulator gemäß irgendeinem der Ansprüche 1 bis 5.

## Revendications

1. Batterie de stockage au plomb comprenant :

   une électrode positive ayant une matière d'électrode positive contenant du $\beta$-$PbO_2$ et de l'$\alpha$-$PbO_2$ ;
   une électrode négative ayant une matière d'électrode négative contenant un composé organique ayant au moins un élément sélectionné dans le groupe constitué d'un groupe sulfone et d'un groupe sulfonate, dans laquelle
   une superficie spécifique de la matière d'électrode positive est 10 $m^2/g$ ou plus, dans laquelle la superficie spécifique est mesurée par un procédé BET utilisant de l'azote gazeux, et
   un rapport ($\alpha$-$PbO_2$/$\beta$-$PbO_2$) entre des intensités maximales de $\beta$-$PbO_2$ et $\alpha$-$PbO_2$ dans un motif de diffraction des rayons X dans la matière d'électrode positive est de 0,4 ou moins, dans lequel l'intensité maximale d'$\alpha$-$PbO_2$ est celle du plan 110 et l'intensité maximale de $\beta$-$PbO_2$ est celle du plan 111.

2. Batterie de stockage au plomb selon la revendication 1, dans laquelle une teneur du composé organique dans la matière d'électrode négative est de 0,3 % en masse ou moins quand une masse totale de la matière d'électrode négative est de 100 % en masse.

3. Batterie de stockage au plomb selon la revendication 1 ou 2, dans laquelle une teneur du composé organique dans la matière d'électrode négative est de 0,1 % en masse ou plus quand une masse totale de la matière d'électrode négative est de 100 % en masse.

4. Batterie de stockage au plomb selon l'une quelconque des revendications 1 à 3, dans laquelle un rapport en masse (matière d'électrode positive / matière d'électrode négative) entre une masse de la matière d'électrode positive et une masse de la matière d'électrode négative est de 1,3 ou moins.

5. Batterie de stockage au plomb selon l'une quelconque des revendications 1 à 4, dans laquelle
la matière d'électrode positive contient une matière active d'électrode positive et une teneur de la matière active d'électrode positive sur la base d'une masse de la matière d'électrode positive est de 95 % en masse ou plus ; et
la matière d'électrode négative contient une matière active d'électrode négative, et une teneur de la matière active d'électrode négative sur la base d'une masse de la matière d'électrode négative est de 93 % en masse ou plus.

6. Véhicule micro-hybride comprenant la batterie de stockage au plomb selon l'une quelconque des revendications 1 à 5.

7. Véhicule à système de démarrage-arrêt comprenant la batterie de stockage au plomb selon l'une quelconque des revendications 1 à 5.

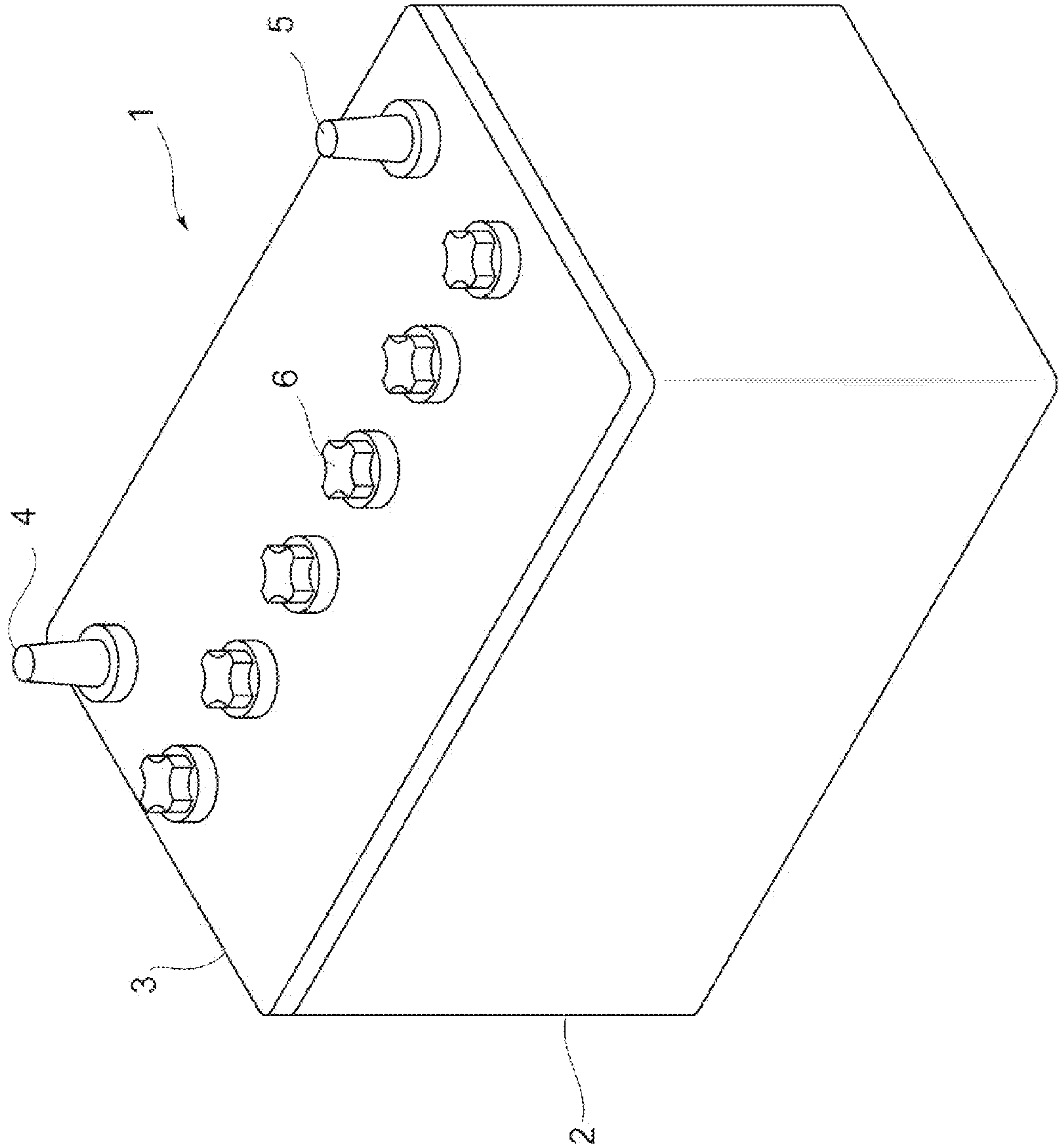


Fig.1

*Fig.2*

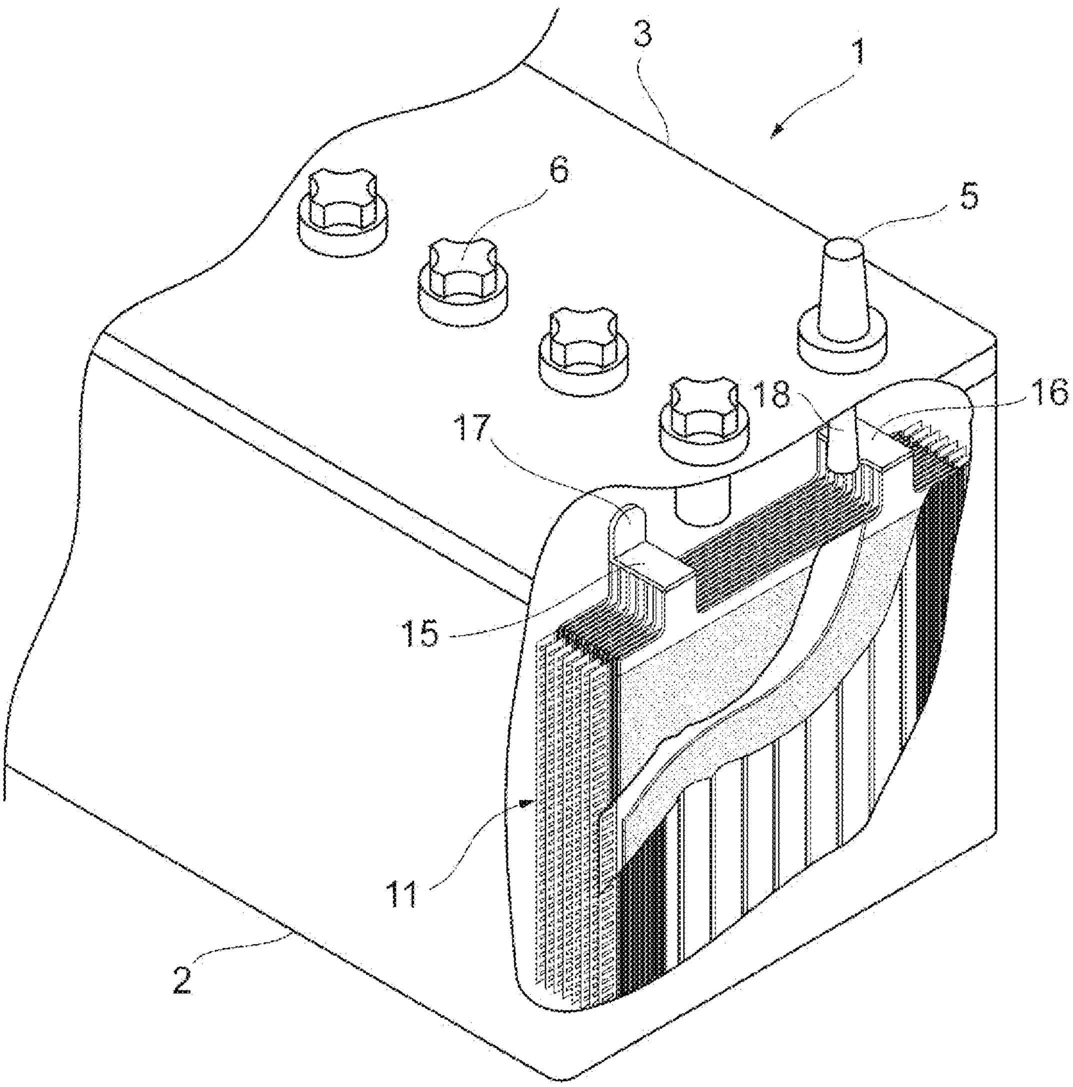

Fig.3

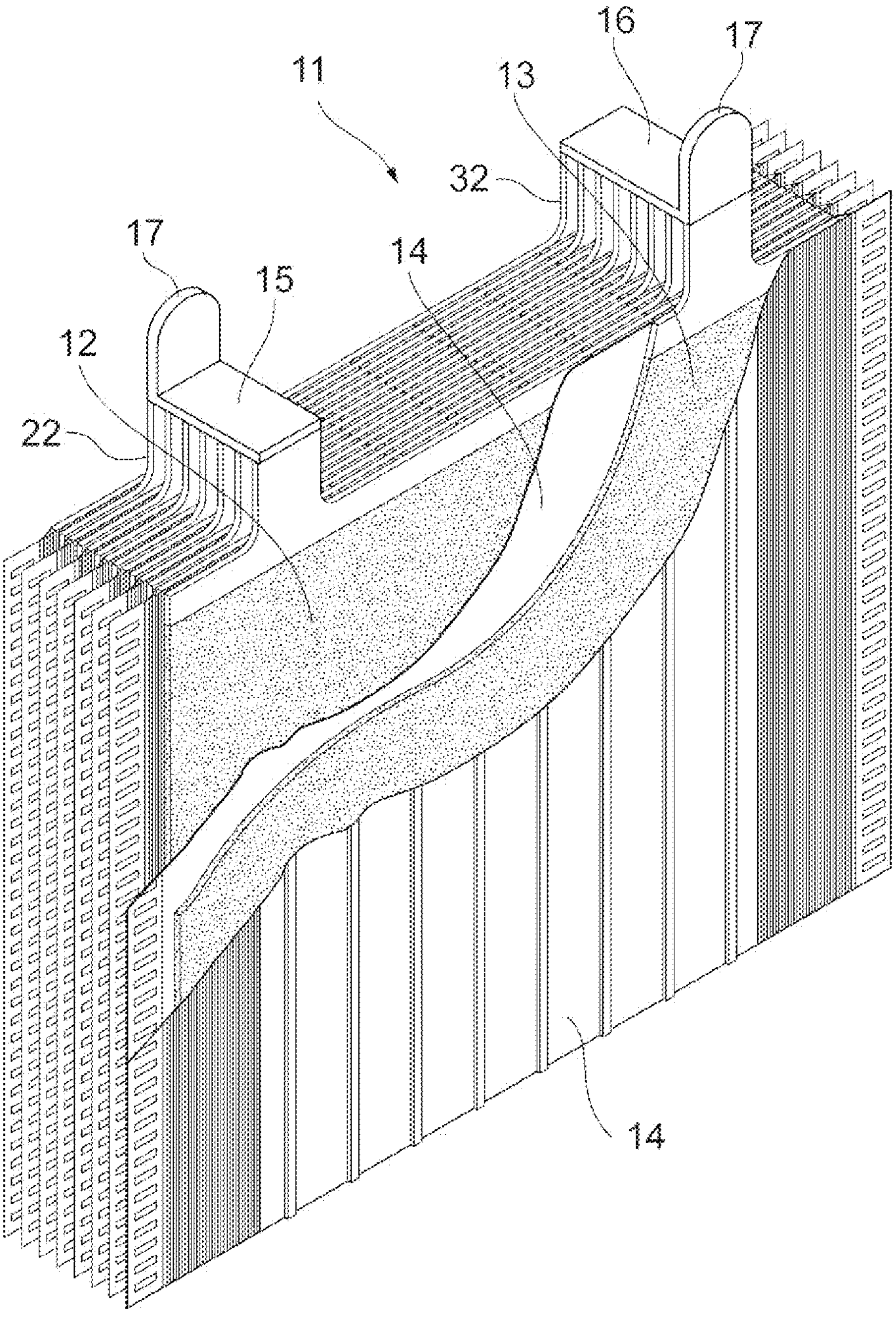

Fig.4

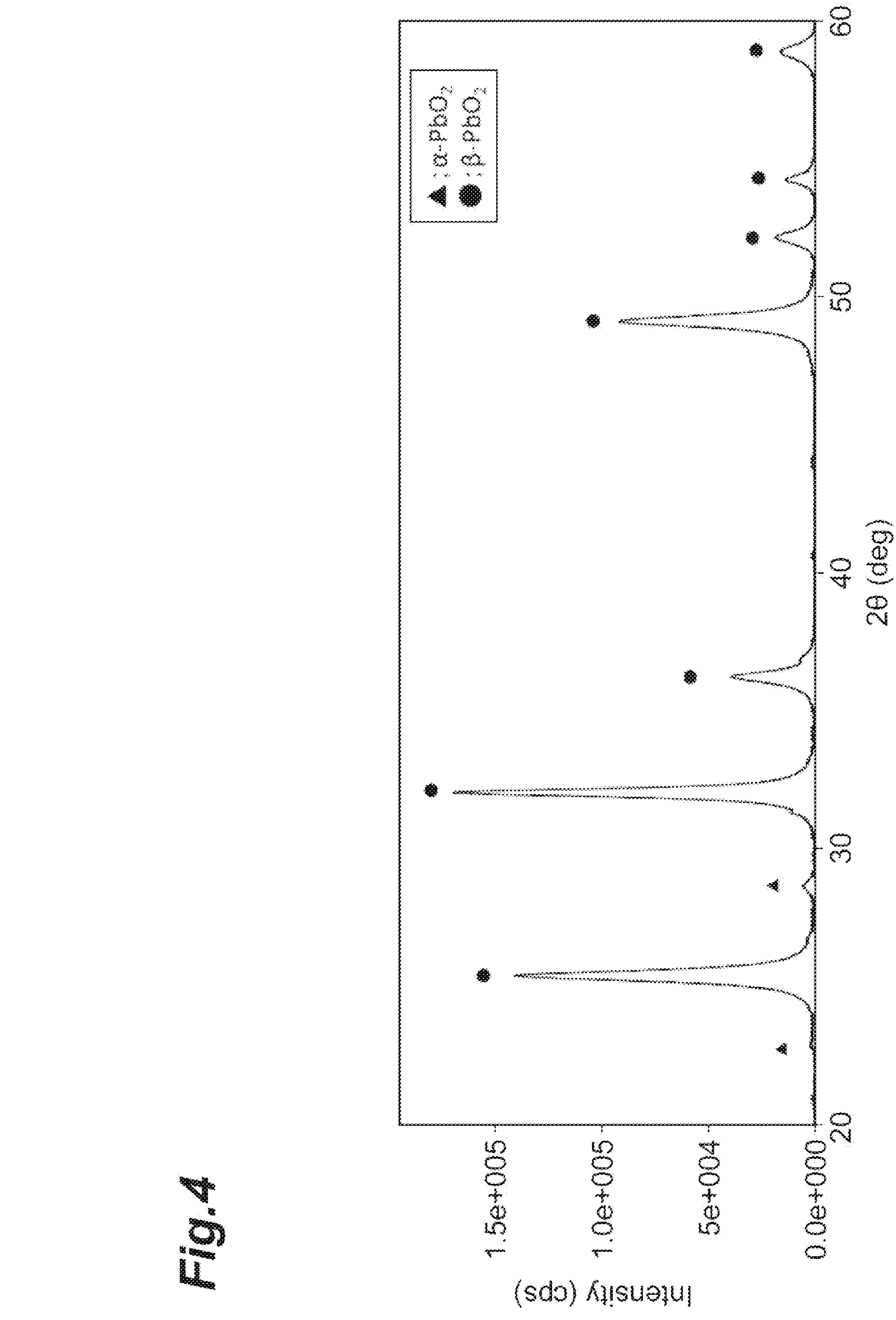
Intensity (cps)
0.0e+000
5e+004
1.0e+005
1.5e+005
20
30
40
50
60
2θ (deg)
▲ ; α-PbO₂
● ; β-PbO₂

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012042917 A